# EUROPÄISCHE PATENTSCHRIFT

(11) **EP 4 479 182 B1**
(45) Veröffentlichungstag und Bekanntmachung des Hinweises auf die Patenterteilung: **14.01.2026**
(21) Anmeldenummer: 22822444.0
(22) Anmeldetag: 25.11.2022
(51) Int. Cl.: B05B 1/18, B05B 15/654, E03C 1/04

(54) **GELENK MIT EINER IM INNERN ANGEORDNETEN FLUIDLEITUNG, DOPPELGELENK, SANITÄRE ANORDNUNG UND KORRESPONDIERENDE VERWENDUNG**
JOINT WITH A FLUID LINE ARRANGED INSIDE, DOUBLE JOINT, SANITARY ASSEMBLY AND CORRESPONDING USE
RACCORD À CONDUITE DE FLUIDE DISPOSÉE EN SON SEIN, DOUBLE RACCORD, ENSEMBLE SANITAIRE ET UTILISATION CORRESPONDANTE

(30) Priorität: 16.02.2022 DE 202022100877 U
(43) Veröffentlichungstag der Anmeldung: 25.12.2024
(73) Patentinhaber: Neoperl GmbH, 79379 Müllheim (DE)
(72) Erfinder: BIRMELIN, David, 79379 Müllheim (DE)
(74) Vertreter: Mertzlufft-Paufler, Cornelius
(86) Internationale Anmeldenummer: PCT/EP2022/083324
(87) Internationale Veröffentlichungsnummer: WO 2023/156037

(56) Entgegenhaltungen:
- EP-B1- 2 868 387
- WO-A1-2007/144918
- DE-A1- 102019 126 094
- DE-U1- 202006 018 395
- US-A1- 2021 205 825

## Beschreibung

Die Erfindung betrifft ein Gelenk gemäss dem Oberbegriff von Anspruch 1 mit einer im Innern des Gelenks angeordneten Fluidleitung, das Gelenk umfassend ein erstes Gelenkelement und ein zweites Gelenkelement zur Aufnahme des ersten Gelenkelements, wobei das erste Gelenkelement innerhalb des zweiten Gelenkelements um einen Drehpunkt im Raum frei schwenkbar ist.

Die Erfindung betrifft weiter ein Doppelgelenk, eine sanitäre Anordnung und eine korrespondierende Verwendung eines Gelenks zur Montage eines Duschkopfes.

Derartige Gelenke sind beispielsweise als Kugelgelenke bei Armaturen im Einsatz, um einen Wasserauslass der Armatur frei schwenkbar innerhalb eines bestimmten Schwenkwinkels anordnen zu können.

Aus der DE 10 2019 126 094 A1 ist etwa eine Sanitärbrause bekannt, aufweisend ein Kugelgelenk, mit dem die Sanitärbrause drehbar an einem Träger befestigbar ist, wobei das Kugelgelenk einen Gelenkkopf aufweist, der zumindest teilweise durch ein Kugelsegment und zumindest teilweise durch ein Ellipsoidsegment gebildet ist.

Derartige Wasserausläufe beinhalten gerade im Sanitärbereich oftmals einen umschaltbaren Strahlregler. Ein solcher umschaltbarer Strahlregler ist beispielsweise durch Drehung des Strahlreglers oder eines Teils des Strahlreglers umschaltbar, womit beispielsweise die Durchflussrate oder Durchflussart des Strahlreglers eingestellt werden kann.

Bei derartigen Kugelgelenken an einer Armatur mit einem derartigen Strahlreger besteht das Problem, dass beim Umschalten des Strahlreglers durch Drehung des Strahlreglers das Kugelgelenk durchdreht und somit keine Betätigung der Umschaltfunktion des Strahlreglers möglich ist.

Zudem kann der am Kegelgelenk befindliche Strahlregler nicht mit einem Anzugsdrehmoment an der Armatur an der Armatur angeschraubt werden, wie es notwendig ist, um eine dichte Verbindung meist mittels Flachdichtung oder verpresster O Ring Dichtung zu ermöglichen. Bei dem Stand der Technik braucht es daher stets weitere Angriffsflächen zum drehmomentfesten Anschrauben des Kugelgelenks an der Armatur.

Bei herkömmlichen Gelenken muss üblicherweise die Reibung des Kugelgelenks sorgfältig auf die Reibung der Drehumschaltung abgestimmt werden. Diese Abstimmung ist jedoch fehleranfällig. Insbesondere ein durch Benutzung auftretender Verschleiß oder eine Veränderung der Gelenkteile oder deren Anordnung kann die Handhabung des Gelenks bzw. des daran angeschlossenen Strahlreglers erschweren oder unmöglich machen.

Der vorliegenden Erfindung liegt daher die Aufgabe zugrunde, ein um einen Drehpunkt im Raum frei schwenkbares Gelenk mit einer im Innern angeordneten Fluidleitung bereitzustellen, dessen Aufbau, insbesondere dessen Handhabbarkeit, verbessert ist.

Die Aufgabe wird gelöst mit einem Gelenk gemäss Anspruch 1.

Das Gelenk kann beispielsweise innerhalb eines bestimmten Schwenkwinkels und/oder um eine oder mehrere Querachsen des Gelenks frei schwenkbar sein.

Hierbei kann die Längsachse beispielsweise auf das erste Gelenkelement und/oder das zweite Gelenkelement bezogen sein. Die Drehbewegung kann hierbei somit unabhängig von der Schwenkbewegung sein, die beispielsweise auf eine Querachse des ersten Gelenkelements und/oder des zweiten Gelenkelements bezogen sein kann. Die eine oder mehreren Querachsen können beispielsweise senkrecht zu der Längsachse angeordnet sein. Die Längsachse ist längs oder parallel zur Fluidleitung angeordnet.

Die verhinderte Drehung des ersten Gelenkelements innerhalb des zweiten Gelenkelements ist eine Drehung bzw. Rotation um eine längs, oder parallel, zur Fluidleitung ausgerichtete Achse und/oder um eine Verbindungsachse der Gelenkelemente. Die Schwenkbarkeit des ersten Gelenkelements innerhalb des zweiten Gelenkelements um einen Drehpunkt im Raum kann die, vorzugsweise freie, Schwenkbarkeit bzw. Rotation des ersten Gelenkelements innerhalb des zweiten Gelenkelements um ein oder mehrere (virtuelle) (Quer-)Achsen umfassen, die quer zur Fluidleitung ausgerichtet sind. Eine freie Schwenkbarkeit kann beispielsweise erreichbar sein, wenn ein Schwenken um jede Querachse möglich ist.

Die verhinderte Drehbarkeit kann beispielsweise zur Übertragung eines Drehmoments von dem ersten Gelenkelement auf das zweite Gelenkelement oder umgekehrt verwendbar sein, oder es kann von einem drehfest montierten ersten (zweiten) Gelenkelement ein Widerlager gegen eine Drehbewegung des zweiten (ersten) Gelenkelements vermittelbar sein. Dies ermöglicht beispielsweise die Anbringung einer Drehbetätigung am zweiten (ersten) Gelenkelement, die gegen das jeweilige Gelenkelement erfolgt, beispielsweise einer noch genauer beschriebenen Umstellvorrichtung.

Zusätzlich kann die Drehung auch um eine Achse verhindert sein, die quer, insbesondere senkrecht, zu allen möglichen Schwenkachsen des ersten Gelenkelements in dem zweiten Gelenkelement liegt. Diese kann durch eine Längsachse eines der Gelenkelemente gegeben sein.

Die Achse der verhinderten Drehung kann beispielsweise als eine Achse charakterisiert werden, um die eine Drehmomentübertragung vom ersten Gelenkelement auf das zweite Gelenkelement (oder umgekehrt) möglich ist.

Derart kann ein an das Gelenk angeschlossener, bzw. ein vom Wasserauslass des Gelenks umfasster, Strahlregler auf einfache Weise durch Drehung des Strahlreglers bedient werden, ohne dass das Gelenk ebenfalls eine Drehbewegung ausführt. Damit ist die Handhabung des Gelenks vereinfacht.

Erfindungsgemäß ist vorgesehen, dass die Verdrehsicherung umfasst: einen konzentrisch zu dem Drehpunkt angeordneten Gelenkkopf mit einer unrunden Kontur und eine Gelenkkopfaufnahme mit einer, der unrunden Kontur entsprechenden, Gegenkontur zur Aufnahme des Gelenkkopfes. Beispielsweise sind der Gelenkkopf mit der unrunden Kontur, ein mit dem Gelenkkopf verbundener Gelenkhals und/oder die Gegenkontur entlang der längs oder parallel zur Fluidrichtung ausgerichteten Achse angeordnet, um die eine Drehung des ersten Gelenkelements innerhalb des zweiten Gelenkelements verhindert ist.

Hierdurch wird eine besonders einfach handhabbare sowie einfach herzustellende Verdrehsicherung bereitgestellt.

In einer Ausgestaltung ist vorgesehen, dass die Verdrehsicherung durch Schwenken des Gelenks aktivierbar und/oder deaktivierbar ist. Somit ist eine drehfeste Verbindung leicht ein- und auskuppelbar. Bevorzugt erfolgt das Schwenken um wenigstens eine Querachse. Nochmals verbesserte Gebrauchseigenschaften ergeben sich, wenn das Schwenken um jede Querachse der freien Schwenkbarkeit erfolgen kann. Eine orientierte Montage des Gelenks ist dann nicht erforderlich. In einer Ausgestaltung ist vorgesehen, dass die Verdrehsicherung durch einen Formschluss zwischen dem ersten Gelenkelement und dem zweiten Gelenkelement hergestellt ist. Somit ist eine Drehmomentübertragung unabhängig von den spezifischen Eigenschaften einer reibschlüssigen Verbindung möglich.

In einer Ausgestaltung ist vorgesehen, an dem ersten Gelenkelement oder dem zweiten Gelenkelement wenigstens ein Vorsprung ausgebildet ist, der zumindest in einer Gelenkstellung in eine Ausnehmung an dem anderen Gelenkelement eingreift. Somit ist eine einfach handhabbare Ein- und Auskopplung einer drehfesten Verbindung über das Gelenk erreichbar. Besonders günstig ist es, wenn die drehfeste Verbindung in wenigstens einer Gelenkstellung aufgehoben ist.

In einer anderen Ausgestaltung ist vorgesehen, dass der Gelenkkopf von dem zweiten Gelenkelement umfasst oder mit diesem drehfest verbunden ist und/oder dass die Gelenkkopfaufnahme von dem ersten Gelenkelement umfasst oder mit diesem drehfest verbunden ist.

Hierdurch ist eine besonders kompakte Bauweise des Gelenks erreicht.

In einer Ausgestaltung ist vorgesehen, dass die Verdrehsicherung durch ein Ineinandergreifen eines Halteprofils in ein korrespondierendes Haltegegenprofil realisiert ist. Hierdurch wird die drehfeste Verbindung auf besonders einfache Weise hergestellt.

In einer Ausgestaltung ist vorgesehen, dass die Verdrehsicherung als Rutschkupplung ausgebildet ist. Alternativ oder zusätzlich kann vorgesehen sein, dass zwischen der Verdrehsicherung und einer ein Gewinde aufweisenden Hülse eine Rutschkupplung ausgebildet ist. Somit ist eine übermäßige Belastung der Verdrehsicherung vermeidbar. Beispielsweise ist somit die Verdrehsicherung aus Kunststoffteilen bildbar.

Das Gewinde kann beispielsweise ein Innengewinde oder ein Außengewinde sein.

Das Gewinde kann beispielsweise an dem ersten oder zweiten Gelenkteil ausgebildet sein.

Hierbei kann beispielsweise ein Dichtring die Drehung der Verdrehsicherung relativ zu dem Gewinde bei Anwendung eines Drehmoments oberhalb eines Grenzdrehmoments ermöglichen. Es hat sich herausgestellt, dass eine Materialpaarung, die sich durch die Verwendung eines Dichtrings entsteht, von Vorteil für die Ausbildung einer Rutschkupplung ist.

Der Dichtring kann beispielsweise zur Abdichtung des Gewindes angeordnet sein. Somit ist ein zusätzliches Bauteil vermeidbar.

Hierbei kann alternativ oder zusätzlich auch vorgesehen sein, dass der Dichtring an einem relativ zu der Hülse drehbaren Teil, insbesondere einer, beispielsweise der bereits erwähnten zweiten, Gelenkpfanne, anliegt. Somit kann die Rutschkupplung ein Durchrutschen des Teils, insbesondere der Gelenkkopfplatte, gegenüber der Hülse ermöglichen, auch wenn die Hülse fest an eine Armatur angeschraubt ist und sich nicht weiter drehen kann.

Beispielsweise weist das Halteprofil und/oder ein oder das Haltegegenprofil Abschrägungen auf, die die Drehung des ersten Gelenkelements innerhalb des zweiten Gelenkelements bei Anwendung eines Drehmoments oberhalb des Grenzdrehmoments ermöglichen.

Hierdurch ist der Gelenkkopf oder eine den Gelenkkopf umfassende Gelenkkopfplatte gegen ein Abdrehen geschützt, wodurch der Gelenkkopf oder die Gelenkkopfplatte aus Kunststoff anstatt aus Messing oder einem anderen Metall oder Metalllegierung gefertigt sein kann, wodurch insbesondere wiederum Herstellungskosten gesenkt werden können.

In einer Ausgestaltung ist vorgesehen, dass die unrunde Kontur und/oder die Gegenkontur mehrkantig, insbesondere sechskantig oder achtkantig ausgebildet ist, wodurch eine einfache Herstellung des Gelenks bei gleichzeitiger Realisierung eines frei bzw. im Wesentlichen frei schwenkbaren Gelenks erreicht wird.

In einer Ausgestaltung ist vorgesehen, dass der Gelenkkopf oder eine Gelenkkopfplatte, an der der Gelenkkopf ausgebildet ist, eine oder mehrere Durchgangsbohrungen als zumindest einen Teil der Fluidleitung umfasst. Hierdurch wird die Kompaktheit des Gelenks weiter erhöht.

In einer Ausgestaltung ist vorgesehen, dass die oder eine Gelenkkopfplatte, an der der Gelenkkopf ausgebildet ist, eine oder mehrere Längsschlitze als zumindest einen Teil der Fluidleitung umfasst. Hierdurch kann der von dem den Gelenkkopf bzw. der Gelenkkopfplatte umfasste Teil der Fluidleitung vergrößert werden. Ferner ist hierdurch eine Entformung längs dieser Schlitze ermöglicht. Beispielsweise kann durch die Schlitze durchgegriffen und ein Hinterschnitt hinter Vorsprüngen der Gelenkkopfplatte ermöglicht werden. Dies ist besonders günstig, wenn der Gelenkkopf und/oder die Gelenkkopfplatte als Spritzgussteil, insbesondere aus Kunststoff, hergestellt werden soll. Eine einfache Entformung ist somit erreichbar.

In einer Ausgestaltung ist vorgesehen, dass der Gelenkkopf und/oder die Gelenkkopfaufnahme einen oder mehrere Bypasskanäle als zumindest einen Teil der Fluidleitung umfasst, die vorzugsweise an dem Gelenkkopf vorbei angeordnet sind.

Die Bypasskanäle können alternativ oder ergänzend zu der Durchflussbohrung vorgesehen sein. Hierdurch kann der Durchfluss verbessert, insbesondere ein Querschnitt der Fluidleitung vergrößert bzw. die Durchflussrate der Fluidleitung erhöht werden.

In einer Ausgestaltung ist vorgesehen, dass die einen oder mehreren Bypasskanäle eine oder mehrere Nuten an dem Gelenkkopf und/oder an der Gelenkkopfaufnahme sind. Hierdurch kann die Herstellung des Gelenks weiter vereinfacht sowie die Kompaktheit des Gelenks weiter erhöht werden.

In einer Ausgestaltung ist vorgesehen, dass der Gelenkkopf massiv ausgebildet ist. Dies hat den Vorteil, dass ein besonders großer Schwenkwinkel erreicht werden kann.

In einer Ausgestaltung ist vorgesehen, dass der Gelenkkopf sternförmig ausgebildet ist. Dabei kann die Gegenkontur der Gelenkkopfaufnahme derart, beispielsweise mehrkantig, ausgestaltet sein, dass der Fluidkanal zwischen der Oberfläche des sternförmigen Gelenkkopfs und der Oberfläche der Gelenkkopfaufnahme gebildet ist. Derart kann die Durchflussrate der Fluidleitung vergrößert werden.

Erfindungsgemäß ist vorgesehen, dass der Gelenkkopf ein erster Gelenkkopf ist und das erste Gelenkelement einen zweiten Gelenkkopf umfasst.

Hierdurch ist auf besonders einfache und kompakte Weise die Schwenkbarkeit des ersten Gelenkelements innerhalb des zweiten Gelenkelements erreicht.

In einer Variante ist dabei der zweite Gelenkkopf, vorzugsweise abdichtend, in einer Gelenkpfanne des zweiten Gelenkelements anordenbar und um den Drehpunkt im Raum frei schwenkbar ist.

Erfindungsgemäß ist vorgesehen, dass die Gelenkkopfaufnahme für den ersten Gelenkkopf innerhalb des zweiten Gelenkkopfes angeordnet ist.

Zusätzlich kann der erste Gelenkkopf von der Gelenkpfanne umfasst oder mit dieser drehfest verbunden sein.

Beispielsweise ist die Gelenkkopfaufnahme konzentrisch innerhalb des zweiten Gelenkkopfes angeordnet. Alternativ kann der Gelenkkopf der zweite Gelenkkopf und die Gelenkpfanne die Gelenkkopfaufnahme sein. Bei einer weiteren Alternative kann der Gelenkkopf mit der unrunden Kontur zusätzlich an dem ersten Gelenkelement, das den zweiten oder eigentlichen Gelenkkopf umfasst, ausgebildet sein.

Hierdurch ist die Kompaktheit des Gelenks weiter erhöht. Ferner kann eine kugelförmige Gelenkpfanne, in der der zweite, vorzugsweise kugelförmige, Gelenkkopf anbringbar bzw. lagerbar ist, drehsicher gehalten werden.

In einer Ausgestaltung ist vorgesehen, dass das erste Gelenkelement, das zweite Gelenkelement oder eine das erste oder zweite Gelenkelement umgreifende Hülse einen Verbindungsabschnitt mit einem Gewinde zur Verbindung mit einer Armatur oder zur Verbindung mit einem Strahlregler umfasst.

Dies hat den Vorteil, dass das Gelenk geschützt und eine Anbringung an die Armatur oder den Strahlregler vereinfacht ist.

In einer Ausgestaltung ist vorgesehen, dass die Hülse zumindest eine plane außenseitige Fläche umfasst. Die plane außenseitige Fläche kann eine Schlüsselfläche sein. Hierdurch kann die Anbringung des Gelenks an die Armatur oder den Strahlregler mittels eines Werkzeugs ermöglicht und damit weiter vereinfacht werden.

In einer Ausgestaltung ist vorgesehen, dass der erste Gelenkkopf von der Hülse umfasst oder mit dieser drehfest verbunden ist.

Eine drehfeste Verbindung kann auf verschiedene Weisen mit Verzahnung und dergleichen oder Stiften erfolgen. Damit kann ein Drehmoment über das erste Gelenkelement auf die Hülse, beispielsweise zur Anbringung der Hülse an eine Armatur, insbesondere von Hand übertragen werden. Derart kann auf Schlüsselflächen an der Außenseite der Hülse verzichtet werden.

Bei einer vorteilhaften Ausgestaltung kann vorgesehen sein, dass an dem ersten Gelenkelement und/oder an dem zweiten Gelenkelement eine innenliegende Werkzeugangriffsfläche, ausgebildet ist. Somit ist eine direkte Einwirkung auf das jeweilige Gelenkelement von außen durchführbar. Dies kann beispielsweise von Vorteil sein, wenn eine Drehmomentübertragung von einer Hülse auf eine Gelenkkopfplatte im unmontierten Zustand nur unzureichend gegeben ist.

Dies kann beispielsweise durch einen Innensechskant realisiert sein. Somit ist eine platzsparende Zugänglichkeit der Werkzeugangriffsfläche erreichbar.

Eine bevorzugte Verwendung des erfindungsgemäßen Gelenks kann vorsehen, dass ein Doppelgelenk aus zwei derartigen Gelenken, insbesondere wie zuvor beschrieben und/oder nach einem der auf ein Gelenk gerichteten Ansprüche, gebildet ist.

Hierbei kann vorgesehen sein, dass die ersten Gelenkelemente starr miteinander verbunden sind oder dass die zweiten Gelenkelemente starr miteinander verbunden sind.

Zur Lösung der genannten Aufgabe ist bei einer sanitären Anordnung ein erfindungsgemäßes Gelenk, insbesondere wie zuvor beschrieben und/oder nach einem der auf ein Gelenk gerichteten Ansprüche, vorgesehen, dass an dem ersten Gelenkelement eine drehverstellbare Umstellvorrichtung angeordnet ist oder an dem zweiten Gelenkelement eine drehverstellbare Umstellvorrichtung angeordnet ist. Somit kann die drehfeste Verbindung im Gelenk ein Widerlager für die Bewegung der Drehverstellung bilden.

Eine mögliche Verwendung eines erfindungsgemäßen Gelenks, insbesondere wie zuvor beschrieben und/oder nach einem der auf ein Gelenk gerichteten Ansprüche ist die Montage eines Duschkopfes an einer Wasserleitung. Diese kann aufgrund der Eigenschaften des Gelenks praktisch werkzeugfrei erfolgen. Nachstehend wird die Erfindung anhand mehrerer bevorzugter Ausführungsbeispiele näher beschrieben.

Es zeigt:
- Fig. 1A: ein im Raum frei schwenkbares Gelenk in einem geschwenkten Zustand,
- Fig. 1B: ein im Raum frei schwenkbares Gelenk, das entlang einer Längsachse des Gelenks ausgerichtet ist,
- Fig. 2: eine erste Ausführungsform des Gelenks in Explosionsdarstellung,
- Fig. 3A: das erste Gelenkelement und der erste Gelenkkopf der ersten Ausführungsform in einer ersten **3-**dimensionalen Ansicht,
- Fig. 3B: das erste Gelenkelement und der erste Gelenkkopf der ersten Ausführungsform in einer zweiten **3-**dimensionalen Ansicht,
- Fig. 4A: den in der Gelenkkopfaufnahme angeordneten ersten Gelenkkopf der ersten Ausführungsform in Seitenansicht,
- Fig. 4B: den in der Gelenkkopfaufnahme angeordneten ersten Gelenkkopf der ersten Ausführungsform in einer ersten Schnittdarstellung,
- Fig. 5A: den in der Gelenkkopfaufnahme angeordneten ersten Gelenkkopf der ersten Ausführungsform in Draufsicht,
- Fig. 5B: den in der Gelenkkopfaufnahme angeordneten ersten Gelenkkopf der ersten Ausführungsform in einer zweiten Schnittdarstellung,
- Fig. 5C: den in der Gelenkkopfaufnahme angeordneten ersten Gelenkkopf der ersten Ausführungsform in einer dritten Schnittdarstellung,
- Fig. 6: eine zweite Ausführungsform des Gelenks in Explosionsdarstellung,
- Fig. 7: eine dritte Ausführungsform des Gelenks in Explosionsdarstellung,
- Fig. 8A: das erste Gelenkelement und der erste Gelenkkopf der dritten Ausführungsform in einer ersten 3-dimensionalen Ansicht,
- Fig. 8B: das erste Gelenkelement und der erste Gelenkkopf der dritten Ausführungsform in einer zweiten 3-dimensionalen Ansicht,
- Fig. 9A: den in der Gelenkkopfaufnahme angeordneten ersten Gelenkkopf der dritten Ausführungsform in Seitenansicht,
- Fig. 9B: den in der Gelenkkopfaufnahme angeordneten ersten Gelenkkopf der dritten Ausführungsform in Schnittdarstellung,
- Fig. 10: eine vierte Ausführungsform des Gelenks in Explosionsdarstellung,
- Fig. 11A: das erste Gelenkelement und der erste Gelenkkopf der vierten Ausführungsform in einer ersten 3-dimensionalen Ansicht,
- Fig. 11B: das erste Gelenkelement und der erste Gelenkkopf der vierten Ausführungsform in einer zweiten 3-dimensionalen Ansicht,
- Fig. 12A: den in der Gelenkkopfaufnahme angeordneten ersten Gelenkkopf der vierten Ausführungsform in Seitenansicht,
- Fig. 12B: den in der Gelenkkopfaufnahme angeordneten ersten Gelenkkopf der vierten Ausführungsform in einer ersten Schnittdarstellung,
- Fig. 13: eine fünfte Ausführungsform des Gelenks in Explosionsdarstellung,
- Fig. 14A: das erste Gelenkelement und der erste Gelenkkopf der fünften Ausführungsform in einer ersten 3-dimensionalen Ansicht,
- Fig. 14B: das erste Gelenkelement und der erste Gelenkkopf der fünften Ausführungsform in einer zweiten 3-dimensionalen Ansicht,
- Fig. 15A: den in der Gelenkkopfaufnahme angeordneten ersten Gelenkkopf der fünften Ausführungsform in Seitenansicht,
- Fig. 15B: den in der Gelenkkopfaufnahme angeordneten ersten Gelenkkopf der fünften Ausführungsform in einer ersten Schnittdarstellung,
- Fig. 16A: den in der Gelenkkopfaufnahme angeordneten ersten Gelenkkopf der fünften Ausführungsform in Draufsicht,
- Fig. 16B: den in der Gelenkkopfaufnahme angeordneten ersten Gelenkkopf der fünften Ausführungsform in einer zweiten Schnittdarstellung,
- Fig. 16C: den in der Gelenkkopfaufnahme angeordneten ersten Gelenkkopf der fünften Ausführungsform in einer dritten Schnittdarstellung,
- Fig. 17: eine sechste Ausführungsform des Gelenks in Explosionsdarstellung,
- Fig. 18A: das erste Gelenkelement und der erste Gelenkkopf der sechsten Ausführungsform in einer ersten 3-dimensionalen Ansicht,
- Fig. 18B: das erste Gelenkelement und der erste Gelenkkopf der sechsten Ausführungsform in einer zweiten 3-dimensionalen Ansicht,
- Fig. 19A: den in der Gelenkkopfaufnahme angeordneten ersten Gelenkkopf der sechsten Ausführungsform in Seitenansicht,
- Fig. 19B: den in der Gelenkkopfaufnahme angeordneten ersten Gelenkkopf der sechsten Ausführungsform in einer ersten Schnittdarstellung,
- Fig. 20A: den in der Gelenkkopfaufnahme angeordneten ersten Gelenkkopf der sechsten Ausführungsform in Draufsicht,
- Fig. 20B: den in der Gelenkkopfaufnahme angeordneten ersten Gelenkkopf der sechsten Ausführungsform in einer zweiten Schnittdarstellung,
- Fig. 20C: den in der Gelenkkopfaufnahme angeordneten ersten Gelenkkopf der sechsten Ausführungsform in einer dritten Schnittdarstellung,
- Fig. 21: die dritte Ausführungsform des Gelenks in zusammengesetzten Zustand in Schnittdarstellung,
- Fig. 22A: den in der Gelenkkopfaufnahme angeordneten ersten Gelenkkopf der vierten Ausführungsform in Draufsicht,
- Fig. 22B: den in der Gelenkkopfaufnahme angeordneten ersten Gelenkkopf der vierten Ausführungsform in einer zweiten Schnittdarstellung,
- Fig. 22C: den in der Gelenkkopfaufnahme angeordneten ersten Gelenkkopf der vierten Ausführungsform in einer dritten Schnittdarstellung,
- Fig. 23: eine Verwendung einer weiteren Ausführungsform des Gelenks in abgewinkelter Stellung in einer Ansicht von der Seite,
- Fig. 24: die Verwendung der Ausführungsform nach Fig. 23 in gestreckter Anordnung in einem Axialschnitt,
- Fig. 25: die Ausführungsform nach Fig. 23 ohne eingeschraubten Strahlregler in einem ersten Axialschnitt (links unten), einem zweiten Axialschnitt (rechts unten) und in einer Frontalansicht zur Verdeutlichung der Lage der Axialschnitte,
- Fig. 26: eine weitere Verwendung eines erfindungsgemäßen Gelenks in einer Ansicht von der Seite,
- Fig. 27: die Verwendung aus Fig. 26 in einer dreidimensionalen Schrägansicht von oben,
- Fig. 28: eine weitere Ausführungsform der Erfindung in einem Axialschnitt,
- Fig. 29: die Ausführungsform nach Fig. 28 in einer dreidimensionalen Schnittansicht (links unten) und in einer Detailvergrößerung (rechts oben),
- Fig. 30: eine weitere erfindungsgemäße Ausführungsform in einer Ansicht von der Seite,
- Fig. 31: die Ausführungsform nach Fig. 30 in einer Axialschnittdarstellung,
- Fig. 32: eine Verwendung einer erfindungsgemäßen Ausführungsform an einer Armatur,
- Fig. 33: eine weitere erfindungsgemäße Ausführungsform in einem Axialschnitt (unten) und einem Radialschnitt (oben),
- Fig. 34: einen Teil der Ausführungsform nach Fig. 33 in teilweise aufgeschnittener Schrägansicht,
- Fig. 35: den Teil aus Fig. 34 der Ausführungsform nach Fig. 33 in einer weiteren Schrägansicht,
- Fig. 36: den Teil aus den Fig. 34 und 35 der Ausführungsform nach Fig. 33 in einer entlang einer Sekante geschnittenen Darstellung,
- Fig. 37: eine weitere erfindungsgemäße Ausführungsform in einem Axialschnitt,
- Fig. 38: einen Teil der Ausführungsform nach Fig. 37 in Schrägansicht,
- Fig. 39: den Teil der Ausführungsform nach Fig. 37 in einer weiteren Schrägansicht,
- Fig. 40: den Teil aus den Fig. 38 und 39 der Ausführungsform nach Fig. 37 in einer entlang einer Sekante geschnittenen Darstellung,
- Fig. 41: die mit einem Strahlregler verbundene Ausführungsform nach Fig. 37.

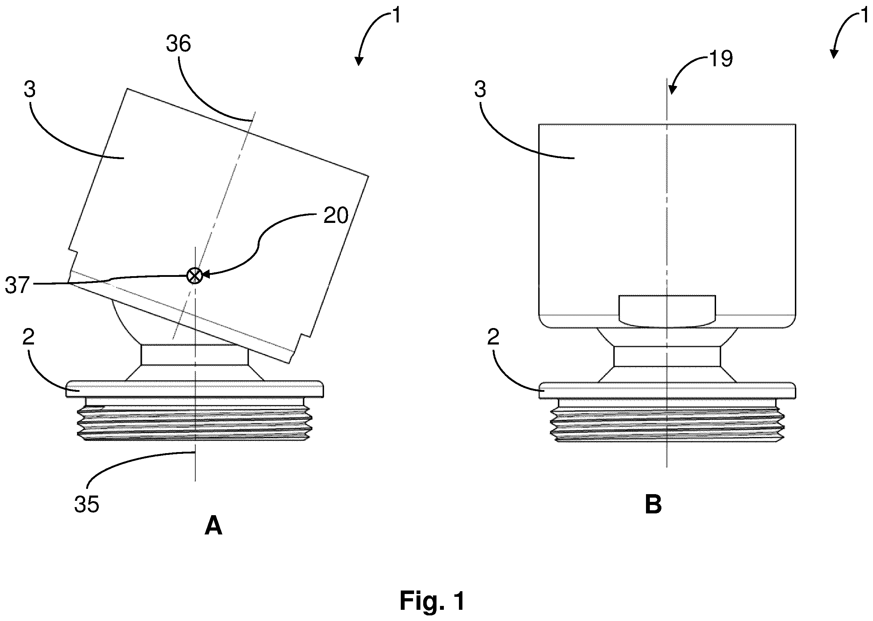

Die Figuren 1A und 1B zeigen ein Gelenk 1 umfassend ein erstes Gelenkelement 2 und ein zweites Gelenkelement 3, wobei das erste Gelenkelement 2 in einer Aufnahme des zweiten Gelenkelements 3 um einen Drehpunkt 20 im Raum frei schwenkbar ist, also um viele Querachsen 37 (hier ist beispielhaft eine Querachse senkrecht auf der Zeichenebene gezeigt). In Figur 1B ist das Gelenk in einem nicht geschwenkten Zustand dargestellt. Das erste Gelenkelement 2 und das zweite Gelenkelement 3 sind entlang einer Längsachse 19 des Gelenks 1 ausgerichtet. Figur 1A zeigt das um eine senkrecht zur Bildebene angeordneten Achse geschwenktes zweites Gelenkelement 3. Es ist ersichtlich, dass die Längsachse 19 des gestreckten Gelenks 1 gemäß Figur 1A in zwei Längsachsen 35, 36 zerfällt, die zueinander abgewinkelt sind, wobei die Längsachse 35 dem ersten Gelenkelement 2 und die Längsachse 36 dem zweiten Gelenkelement 3 zugeordnet ist.

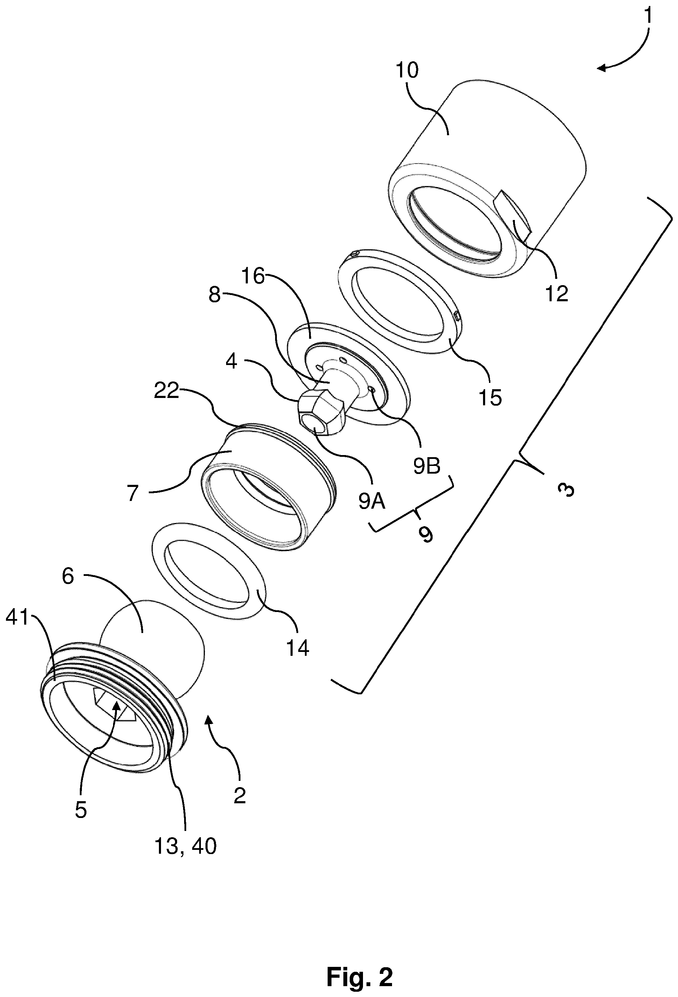

Die Figur 2 zeigt eine erste Ausführungsform des Gelenks 1 in Explosionsdarstellung. Hierbei ist die strenge Reihenfolge der Teile in einer Explosionsdarstellung zur Verbesserung der Verständlichkeit nicht eingehalten, sondern die Hülse 10 wurde ganz rechts (statt an zweiter Position von links) angeordnet.

Gleiche oder ähnliche Merkmale zu Figur 1 sind mit gleichen Bezugszeichen versehen. Das zweite Gelenkelement 3 umfasst einen konzentrisch zum Drehpunkt 20 des Gelenks 1 angeordneten ersten Gelenkkopf 4 mit einer unrunden Kontur. Die unrunde Kontur des ersten Gelenkkopfes 4 stellt im gezeigten Beispiel einen nach außen gewölbten bzw. kugelformartigen Sechskant dar. Eine Grundfläche oder die sich gegenüberliegenden Grundflächen des Gelenkkopfes 4 sind sechskantig ausgebildet.

Das erste Gelenkelement 2 umfasst eine Gelenkkopfaufnahme 5 mit einer der unrunden Kontur des ersten Gelenkkopfes 4 entsprechenden Gegenkontur zur Aufnahme des ersten Gelenkkopfes 4. Die Gelenkkopfaufnahme 5 stellt im gezeigten Beispiel eine Sechskant-Öffnung dar. Die Sechskant-Öffnung weist jeweils gegenüberliegende parallel zueinander angeordnete Seitenflächen auf.

Das erste Gelenkelement 2 umfasst einen zweiten bzw. eigentlichen Gelenkkopf 6. Das zweite Gelenkelement 3 umfasst eine Gelenkpfanne 7 zur Aufnahme des zweiten Gelenkkopfes 6. Der zweite Gelenkkopf 6 ist in der Gelenkpfanne 7 um den Drehpunkt 20 des Gelenkes 1 im Raum frei schwenkbar. Der erste Gelenkkopf 4 kann mit der Gelenkpfanne 7 fest oder drehfest verbunden sein. Anders ausgedrückt: Eine den ersten Gelenkkopf 4 umfassende Gelenkkopfplatte 16 kann mit der Gelenkpfanne 7 fest oder drehfest verbunden sein.

Der erste Gelenkkopf 4 ist derart von der Gelenkpfanne 7 umfasst bzw. mit der Gelenkpfanne 7 verbunden, dass der erste Gelenkkopf 4 in der Gelenkkopfaufnahme 5 des in der Gelenkpfanne 7 angebrachten zweiten Gelenkkopfes 6 anbringbar ist. Mit anderen Worten: Ist der zweite Gelenkkopf 6 in der Gelenkpfanne 7 angeordnet bzw. gelagert, so greift der erste Gelenkkopf 4 in die Gelenkkopfaufnahme 5 ein.

Der erste Gelenkkopf 4 mit seiner unrunden Kontur und die Gelenkkopfaufnahme 5 mit der den ersten Gelenkkopf 4 aufnehmenden Gegenkontur stellen gemeinsam eine Verdrehsicherung des Gelenkes 1 dar. Mit anderen Worten: Der erste Gelenkkopf 4 lässt sich innerhalb der Gelenkkopfaufnahme 5 nicht drehen, d. h. nicht um die Längsachse 19 des Gelenks 1 oder der Gelenkelemente 2, 3 rotieren. Wiederum anders ausgedrückt: Das erste Gelenkelement 2 ist im zusammengesetzten Zustand des Gelenks 1 mit dem zweiten Gelenkelement 3, insbesondere mit der Gelenkpfanne 7 und/oder der Gelenkkopfplatte 16 mit der Hülse 10 drehfest verbunden.

Das zweite Gelenkelement 3, genauer der erste Gelenkkopf 4, umfasst einen Gelenkkopfhals 8. Der Gelenkkopfhals 8 verbindet den ersten Gelenkkopf 4 und die Gelenkkopfplatte 16.

Das Gelenk 1 umfasst eine im Innern des Gelenks 1 angeordnete Fluidleitung 9. Die Fluidleitung 9 umfasst im gezeigten Beispiel eine erste Durchgangsbohrung 9A, die sich durch den Gelenkkopfhals 8 und den ersten Gelenkkopf 4 erstreckt. Die Fluidleitung 9 umfasst ferner mehrere zweite Durchgangsbohrungen 9B in der den Gelenkkopfhals 8 und den ersten Gelenkkopf 4 stützenden Gelenkkopfplatte 16. Die gezeigte Fluidleitung 9 führt teilweise durch den Gelenkkopf 4 hindurch und teilweise an dem Gelenkkopf 4 vorbei.

Die Fluidleitung 9 bzw. der Fluidfluss durch die Fluidleitung 9 ist entlang der Längsachse 19 des Gelenks 1 ausgerichtet.

Anders ausgedrückt: Das erste Gelenkelement 2 ist innerhalb des zweiten Gelenkelements 3 um eine oder mehrere Achsen schwenkbar bzw. rotierbar, die quer zu einer längs der Fluidleitung bzw. des Fluidflusses oder der Längsachse 19 des Gelenks 1 angeordnet sind. Durch die Verdrehsicherung ist eine Drehung bzw. Rotation um eine Achse, die längs der Fluidleitung bzw. des Fluidflusses oder der Längsachse 19 des Gelenks 1 angeordnet ist, verhindert. Diese Achse kann beispielsweise durch die Längsachse 19 des gestreckten Gelenks 1 und/oder durch eine oder beide der Längsachsen 35, 36 der Gelenkelemente 2, 3 gegeben sein.

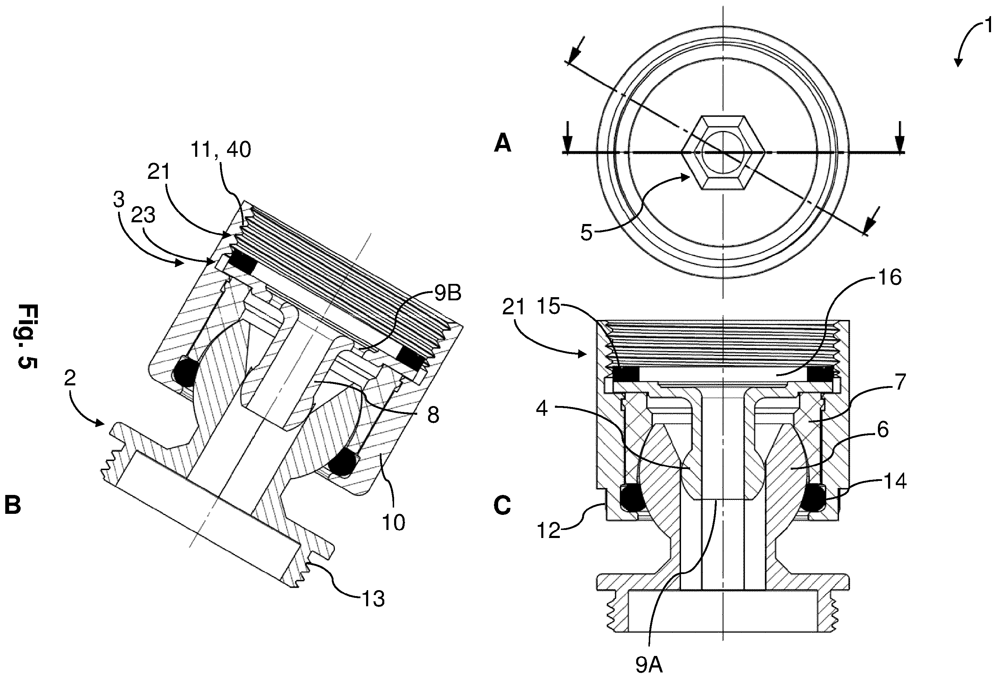

Das zweite Gelenkelement 3 umfasst eine Hülse 10. Die Hülse 10 ist mit dem ersten Gelenkkopf 4 und der Gelenkpfanne 7 drehfest verbindbar. Die Hülse 10 umfasst ein als Innengewinde 11 ausgebildetes Gewinde 40 (vgl. Figur 5), über welches die Hülse 10 an eine Armatur, beispielsweise einen Wasserhahn, anbringbar ist. Die Gelenkpfanne 7 sowie der erste Gelenkkopf 4 sind in der Hülse 10 anbringbar, insbesondere einschraubbar oder einclipbar. Die Gelenkpfanne 7 und der Gelenkkopf 4 können mit der Hülse 10 fest oder drehfest verbunden sein, beispielsweise mittels einer Verzahnung oder Stiften. Im gezeigten Beispiel kann die Gelenkpfanne 7 über einen Hinterschnitt 22, der in eine innenseitige Nut 23 an der Hülse 10 einrastet, mit der Hülse 10 verbunden werden.

Wie im gezeigten Beispiel dargestellt, ist der zweite Gelenkkopf 6 kugelförmig ausgestaltet. Ebenso ist eine Innenseite der Gelenkpfanne 7 hohlkugelförmig ausgestaltet (vgl. Figur 5). Im zusammengesetzten Zustand ist das erste Gelenkelement 2, insbesondere der kugelförmige zweite Gelenkkopf 6, mit dem zweiten Gelenkelements 3, insbesondere mit der hohlkugelförmigen Gelenkpfanne 7, mithilfe der Verdrehsicherung 4, 5 drehfest verbunden.

Die Hülse 10 umfasst an ihrer Außenseite eine plane Fläche 12. Die plane Fläche 12 dient als Schlüsselfläche zur Bereitstellung einer Angriffsfläche für einen Werkzeugschlüssel, um die Hülse 10 an eine Armatur anzuschrauben. Durch die drehfeste Verbindung des ersten Gelenkelements 2 mit dem zweiten Gelenkelement 3 kann das Anschrauben alternativ über eine Übertragung eines Drehmoments von dem ersten Gelenkelement 2 auf das zweite Gelenkelement 3, insbesondere von Hand, ausgeführt werden.

Das erste Gelenkelement 2 umfasst ein als Außengewinde 13 ausgebildetes Gewinde 40. Das Außengewinde 13 ist an einer Hülse 41 ausgebildet, die mit dem zweiten Gelenkkopf 6 einstückig verbunden ausgebildet sein kann.

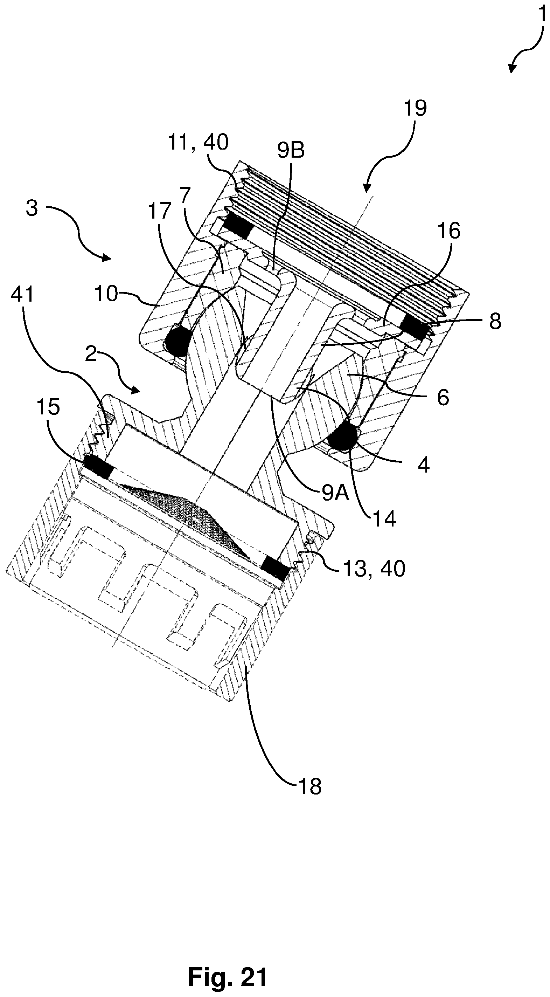

An das Außengewinde 13 kann beispielsweise ein Strahlregler (vgl. Figur 21) angebracht bzw. angeschraubt werden.

Das Gelenk 1, genauer das zweite Gelenkelement 3, umfasst einen ersten Dichtring 14 zur abdichtenden Verbindung des ersten Gelenkelements 2 mit dem zweiten Gelenkelement 3 (vgl. Fig. 5).

Das Gelenk 1, genauer das zweite Gelenkelement 3, umfasst einen zweiten Dichtring 15, zur abdichtenden Verbindung des zweiten Gelenkelements 3 mit einer Armatur (vgl. Fig. 5).

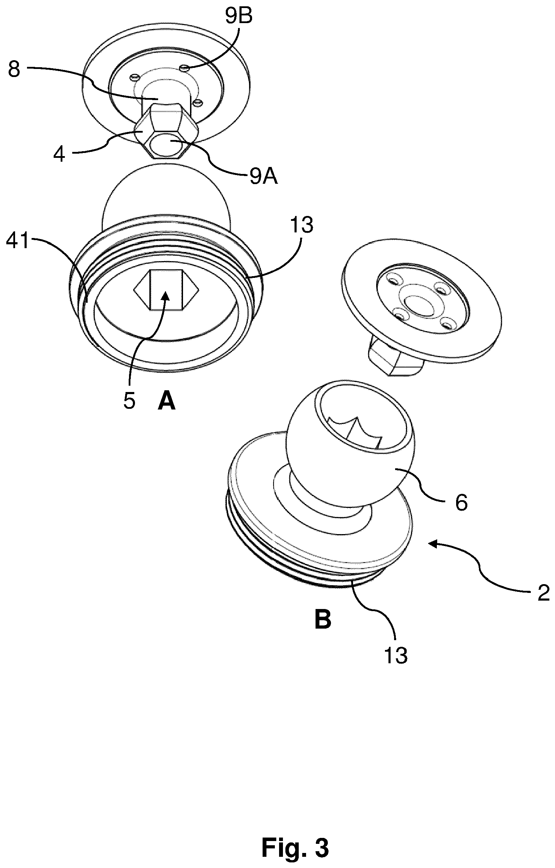

Die Figuren 3A und 3B zeigen das erste Gelenkelement 2 und den auf der Gelenkkopfplatte 16 angebrachten ersten Gelenkkopf 4 in verschiedenen 3-dimensionalen Ansichten. Gleiche o. ä. Merkmale sind mit gleichen Bezugszeichen versehen.

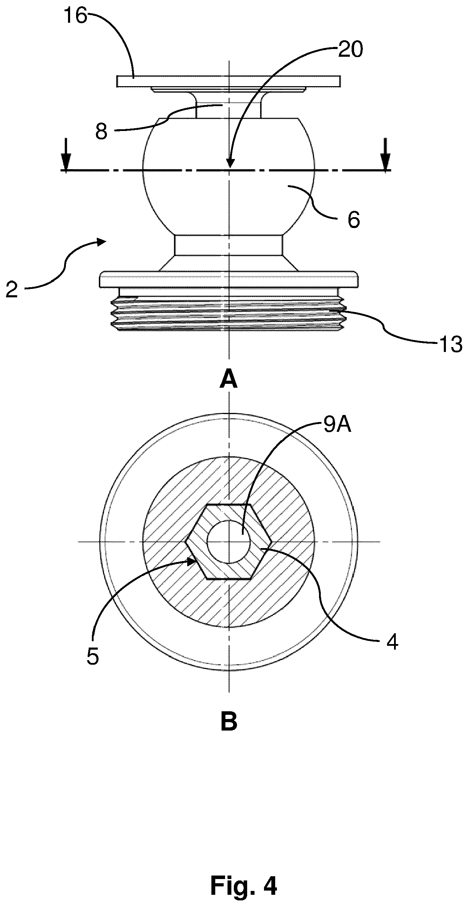

Die Figur 4A zeigt den auf der Gelenkkopfplatte 16 angebrachten und in der Gelenkkopfaufnahme 5 des ersten Gelenkelements 2 angeordneten ersten Gelenkkopf 4 in Seitenansicht. Die Figur 4B zeigt den in der Figur 4A dargestellten und in der Gelenkkopfaufnahme 5 angeordneten Gelenkkopf 4 in Schnittdarstellung. Gleiche o. ä. Merkmale sind gleichen Bezugszeichen versehen. Wie deutlich in Figur 4B gezeigt, ist der Gelenkkopf 4 in der Gelenkkopfaufnahme 5 formschlüssig anordenbar. Mit anderen Worten: Der Gelenkkopf 4 kann mit dem ersten Gelenkelement 2 formschlüssig verbunden werden. Wiederum anders ausgedrückt: Die unrunde Kontur des Gelenkkopfes 4 greift in die entsprechend geformte Gegenkontur der Gelenkkopfaufnahme 5 ein, um den Gelenkkopf 4 mit dem ersten Gelenkelement 2 drehfest zu verbinden. Derart bilden die Gelenkkopfaufnahme 5 und der erste Gelenkkopf 4 eine Verdrehsicherung.

Die Figuren 5A-C zeigen das im Figur 2 dargestellte Gelenk 1 in zusammengesetztem Zustand in Draufsicht und in Schnittdarstellung. Gleiche o. ä. Merkmale sind gleichen Bezugszeichen versehen. In den Figuren 5A-C deutlich erkennbar sind die abdichtenden Funktionen des ersten und zweiten Dichtrings 14, 15 sowie das Innengewinde 11 der Hülse 10. Das Innengewinde 11 der Hülse 10 ist von einem Verbindungsabschnitt 21 der Hülse 10 umfasst.

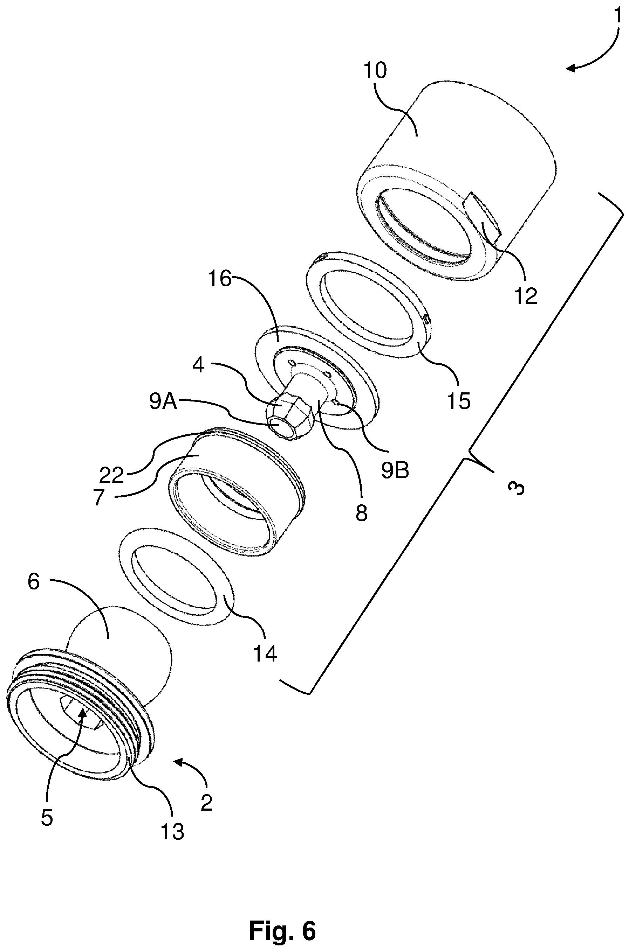

Die Figur 6 zeigt eine zweite Ausführungsform des Gelenks 1 in Explosionsdarstellung. Gleiche o. ä. Merkmale sind mit gleichen Bezugszeichen versehen. Im Gegensatz zur ersten Ausführungsform des Gelenks 1 umfasst die zweite Ausführungsform des Gelenks 1 einen achtkantigen Gelenkkopf 4. Das Vorsehen einer höheren Anzahl Kanten des mehrkantigen Gelenkkopfes 4 kann in einer vereinfachten Handhabung bei der Schwenkung des ersten Gelenkelements 2 innerhalb des zweiten Gelenkelements 3 in verschiedenen Richtungen, d. h. um verschiedene, quer zu einer Längsachse der Fluidleitung 9 bzw. des Fluidflusses, resultieren. Mit anderen Worten: Die Schwenkbarkeit des Gelenks 1 ist verbessert.

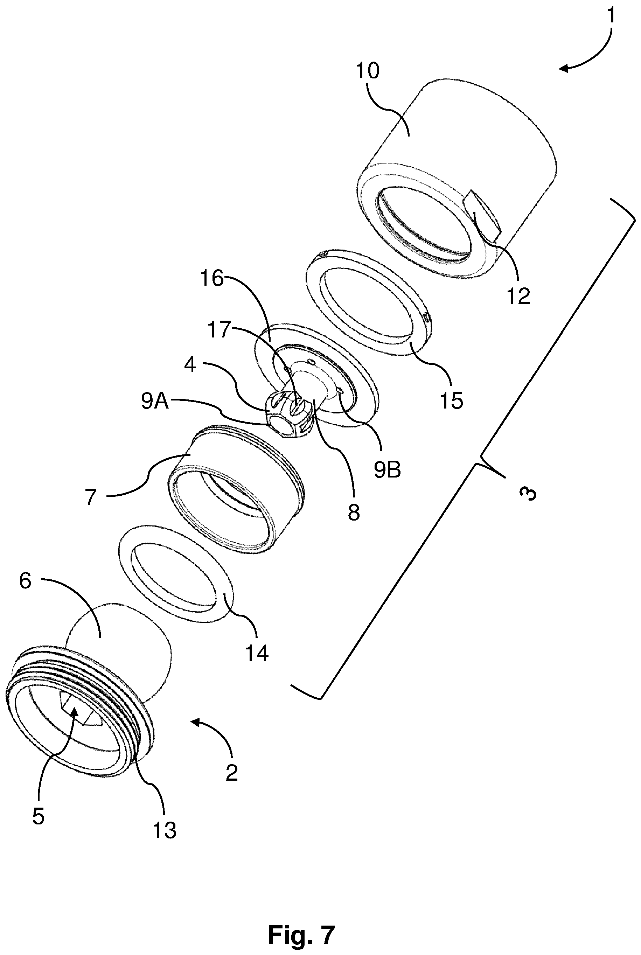

Die Figur 7 zeigt eine dritte Ausführungsform des Gelenks 1 in Explosionsdarstellung. Gleiche o. ä. Merkmale sind mit gleichen Bezugszeichen versehen. Im Gegensatz zur ersten und zweiten Ausführungsform des Gelenks 1 umfasst die dritte Ausführungsform des Gelenks 1 mehrere Bypasskanäle 17. Die mehreren Bypasskanäle 17 sind als in Nuten an dem ersten Gelenkkopf 4 ausgebildet. Die Bypasskanäle 17 sind Teil der Fluidleitung 9. Ein durch die zweiten Durchgangsbohrungen 9B tretender Fluidfluss kann über die Bypasskanäle 17 in die Gelenkkopfaufnahme 5 geleitet werden. Auf diese Weise ist der Gesamtquerschnitt der Fluidleitung 9 vergrößert und somit die Durchflussrate des Fluidflusses durch die Fluidleitung 9 erhöht.

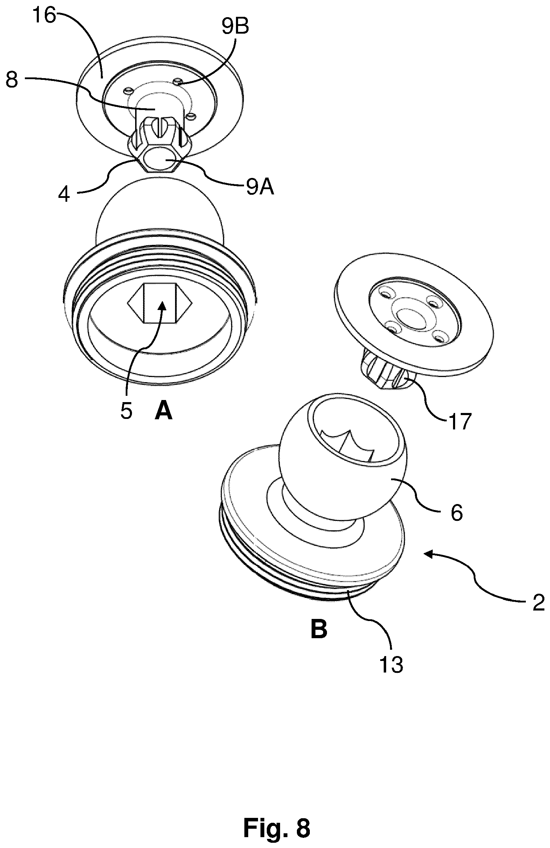

Die Figuren 8A und 8B zeigen das erste Gelenkelement 2 und den auf der Gelenkkopfplatte 16 angebrachten ersten Gelenkkopf 4 der dritten Ausführungsform in verschiedenen 3-dimensionalen Ansichten. Gleiche o. ä. Merkmale sind mit gleichen Bezugszeichen versehen.

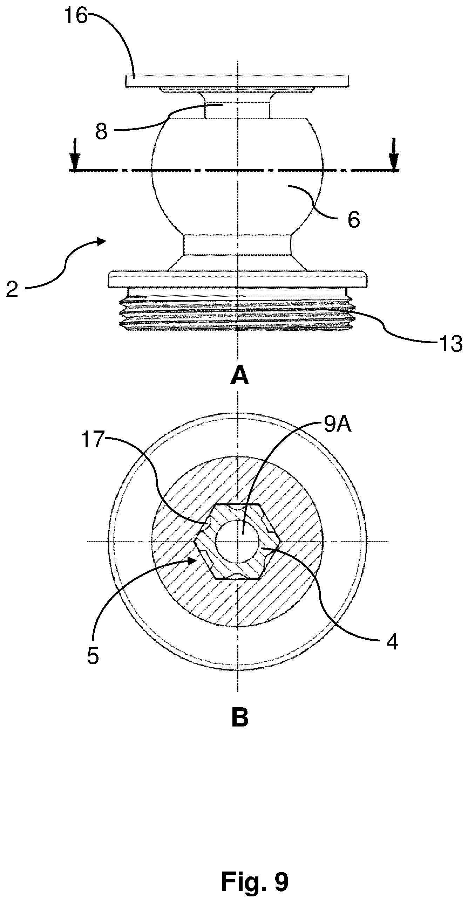

Die Figur 9A zeigt den auf der Gelenkkopfplatte 16 angebrachten und in der Gelenkkopfaufnahme 5 des ersten Gelenkelements 2 angeordneten ersten Gelenkkopf 4 der dritten Ausführungsform in Seitenansicht. Die Figur 9B zeigt den in der Figur 9A dargestellten und in der Gelenkkopfaufnahme 5 angeordneten Gelenkkopf 4 in Schnittdarstellung. Gleiche o. ä. Merkmale sind gleichen Bezugszeichen versehen. Wie deutlich in Figur 9B erkennbar, ermöglichen die Bypasskanäle 17 einen Fluidfluss zwischen einer Außenfläche des ersten Gelenkkopfes 4 und einer Innenfläche der Gelenkkopfaufnahme 5. Die unrunde Kontur des Gelenkkopfes 4 und die entsprechend geformte Gegenkontur der Aufnahme 5 bilden auch bei den vorgesehenen Zwischenräumen eine zumindest teilweise formschlüssige Verbindung, d.h. eine Verdrehsicherung.

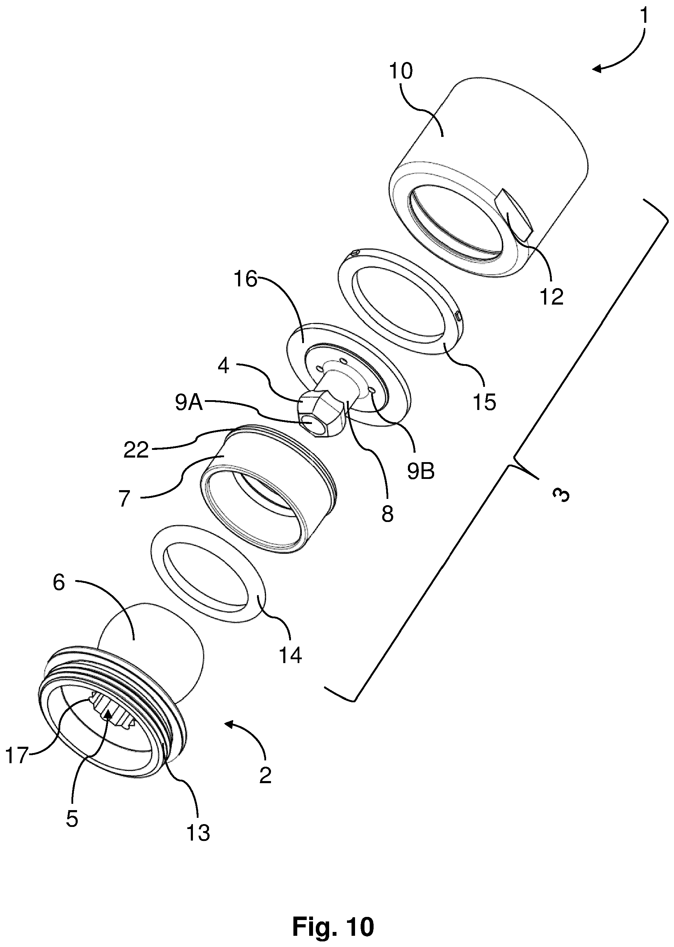

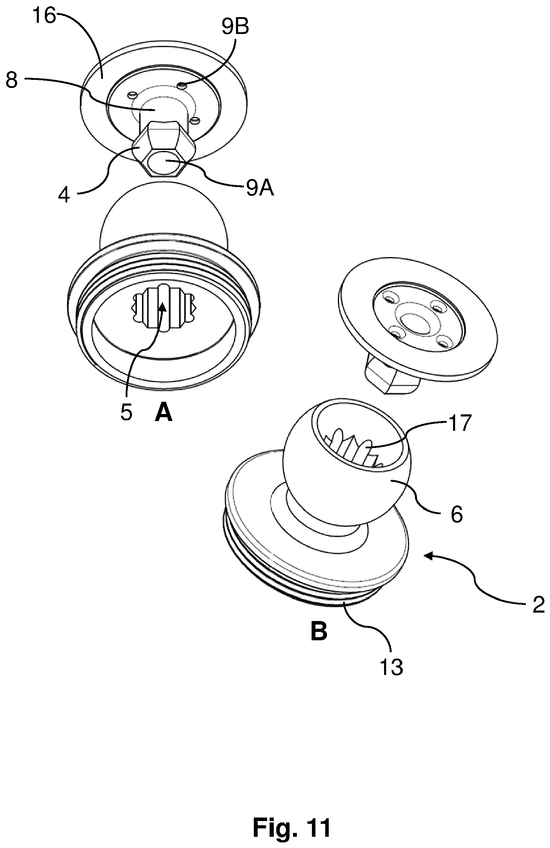

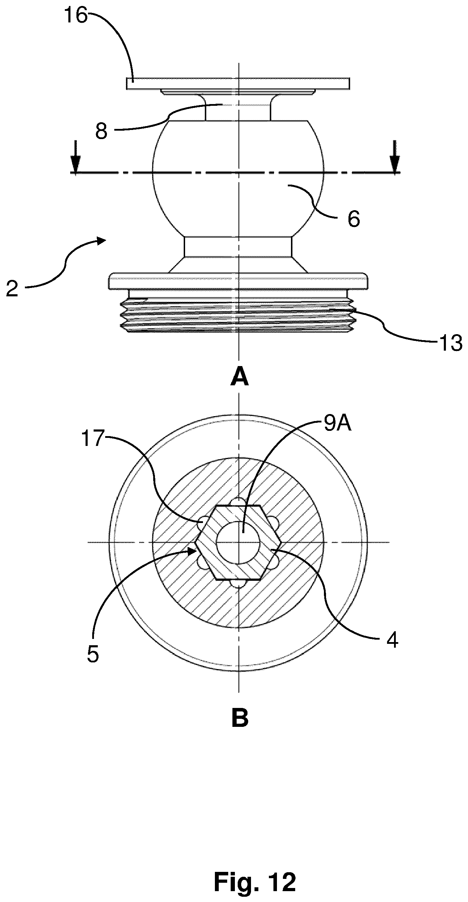

Die Figuren 10 bis 12 und 22 zeigen eine vierte Ausführungsform des Gelenks 1. Gleiche o. ä. Merkmale sind mit gleichen Bezugszeichen versehen. Wie in den Figuren 10 bis 12 deutlich erkennbar, sind die mit Bezug auf die dritte Ausführungsform beschriebenen Bypasskanäle 17 nicht an dem ersten Gelenkkopf 4, sondern an der Gelenkkopfaufnahme 5 ausgebildet. Mit anderen Worten: Die Oberfläche der Gelenkkopfaufnahme 5 weist Bypasskanäle 17 in Form von Aussparungen bzw. Nuten auf, die einen Fluidfluss zwischen der Oberfläche der Gelenkkopfaufnahme 5 und der Oberfläche des ersten Gelenkkopfes 4 erlauben. Alternativ können sowohl an dem ersten Gelenkkopf 4 als auch an der Gelenkkopfaufnahme 5 Bypasskanäle 17 ausgebildet sein.

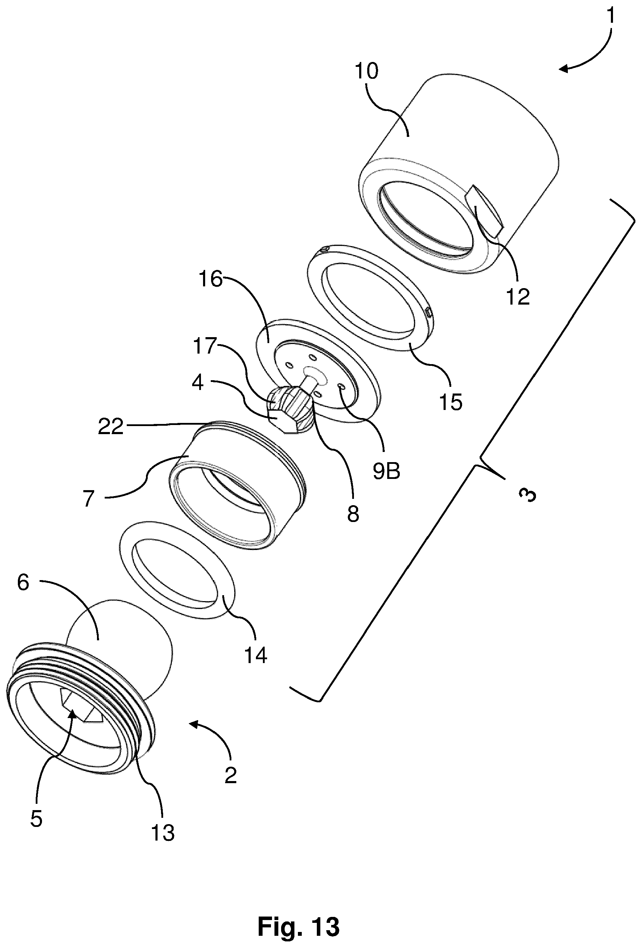

Die Figur 13 zeigt eine fünfte Ausführungsform des Gelenks 1 in Explosionsdarstellung. Gleiche o. ä. Merkmale sind mit gleichen Bezugszeichen versehen. Im Gegensatz zu den oben beschriebenen Ausführungsformen des Gelenks 1 umfasst das Gelenk 1 der fünften Ausführungsform einen stiftartigen Gelenkkopfhals 8 ohne Durchgangsbohrung. Mit anderen Worten: Der Gelenkkopfhals 8 ist als Pin ausgestaltet.

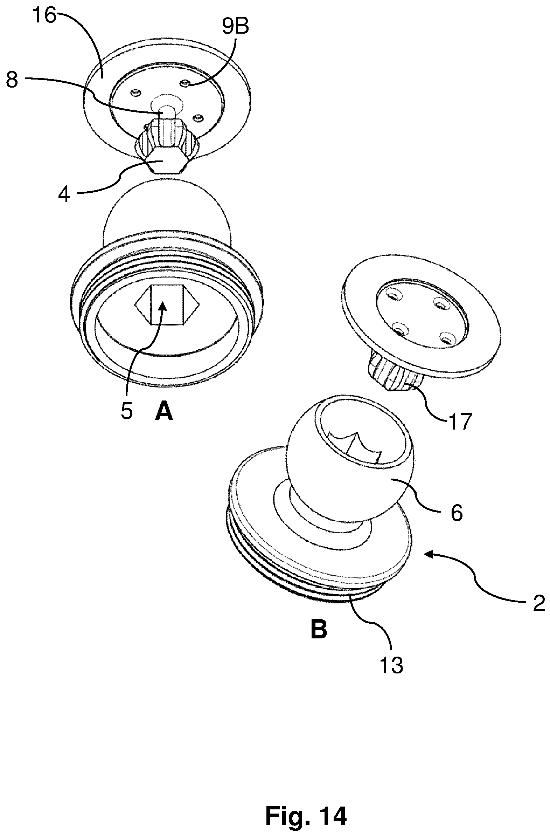

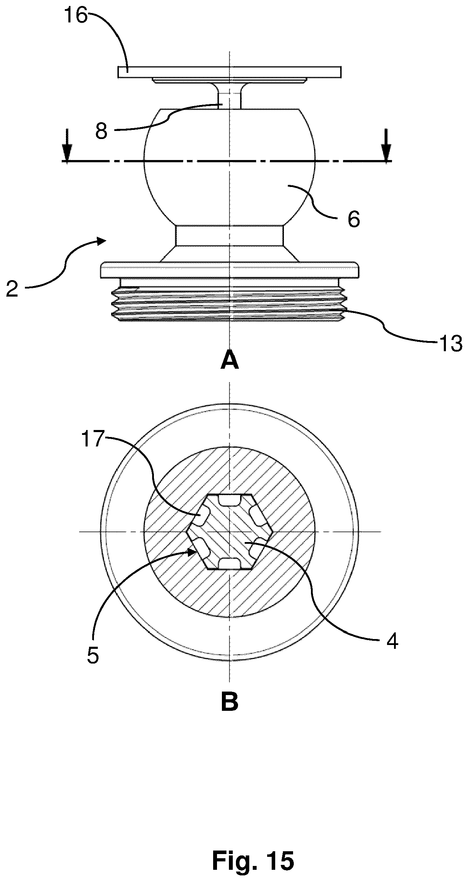

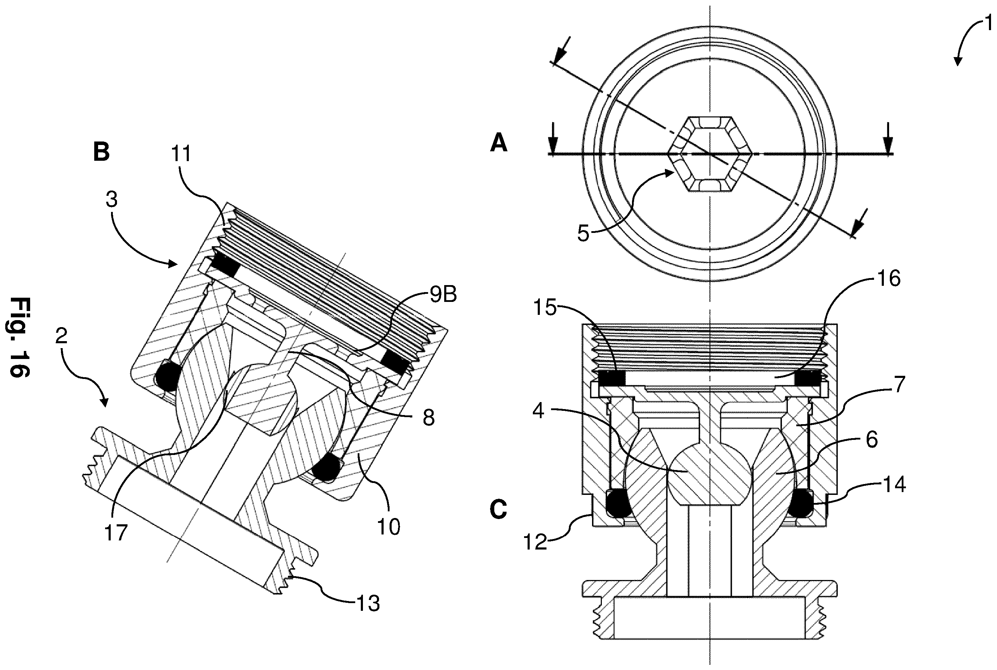

Wie in den Figuren 13 bis 16 deutlich dargestellt, umfasst der erste Gelenkkopf 4 Nuten als Bypasskanäle 17. Wie in der beschriebenen dritten Ausführungsform, umfasst das Gelenk 1 der fünften Ausführungsform einen sechskantförmigen ersten Gelenkkopf 4. Mit anderen Worten: Eine Grundfläche des ersten Gelenkkopfes ist mehrkantig, hier sechskantig, ausgebildet. Die Nuten bzw. Bypasskanäle 17 sind an den Seitenflächen des mehrkantigen ersten Gelenkkopfs 4 ausgestaltet.

Die Bypasskanäle 17 sind im Vergleich zu den mit Bezug auf die erste bis vierte Ausführungsform beschriebenen Bypasskanäle 17 größer, d.h. mit einem größeren Kanalquerschnitt ausgestaltet.

Der als Pin ausgestaltete Gelenkkopfhals 8 erlaubt durch seinen relativ dünnen Querschnitt einen relativ großen Schwenkwinkel des ersten Gelenkelements 2 innerhalb des zweiten Gelenkelements 3.

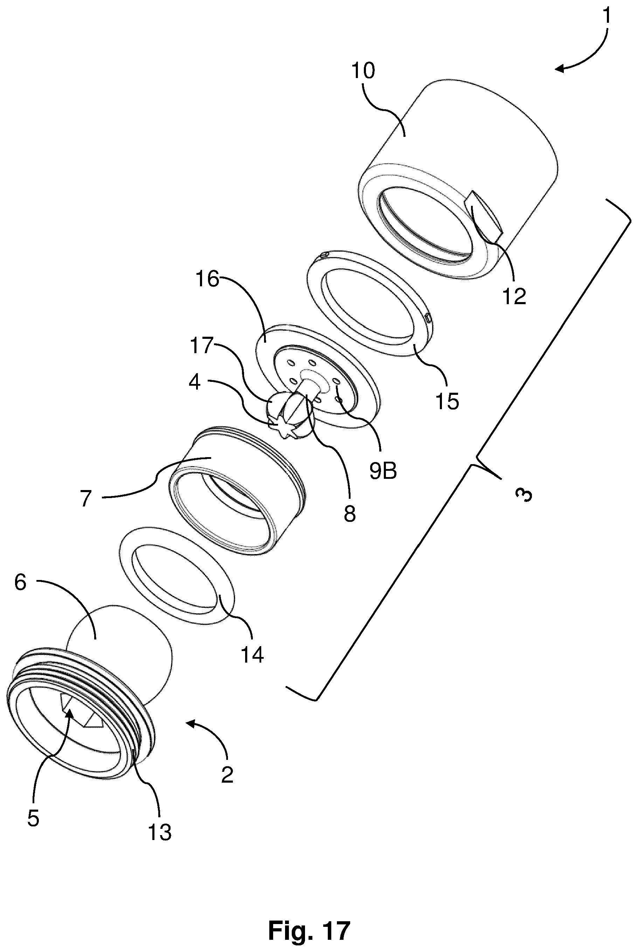

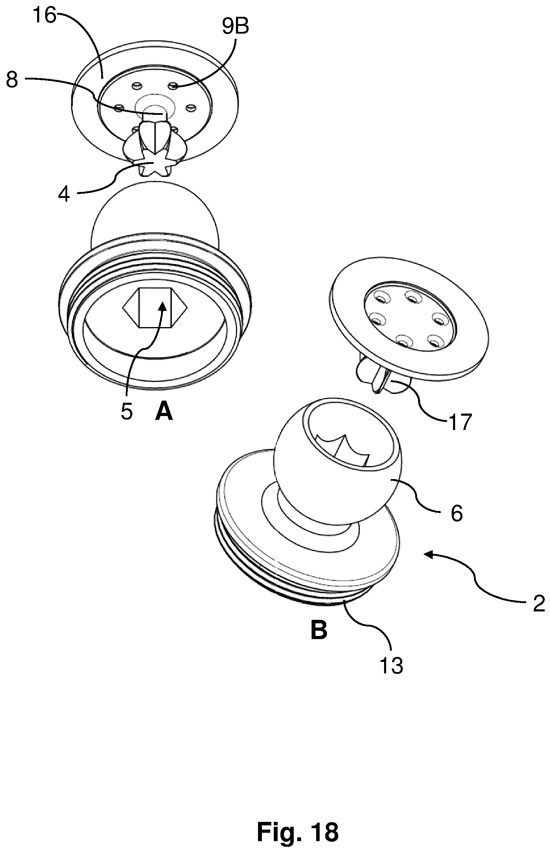

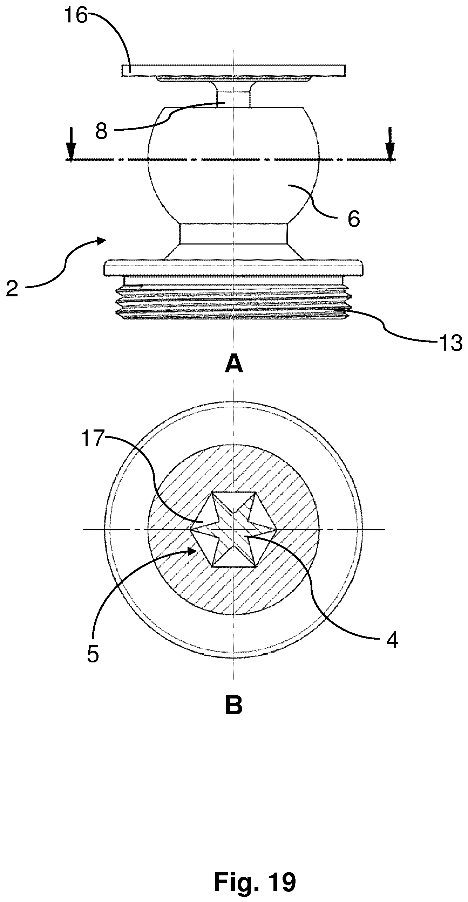

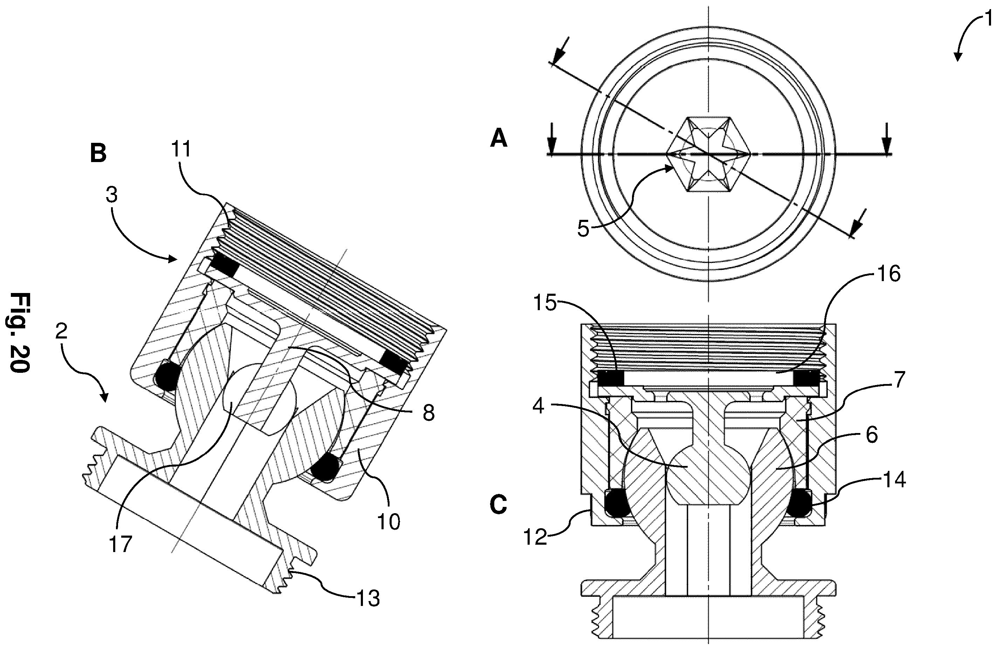

Die Figuren 17 bis 20 zeigen eine sechste Ausführungsform des Gelenks 1. Gleiche o. ä. Merkmale sind gleichen Zugzeichen versehen. Ebenso wie bei der beschriebenen fünften Ausführungsform des Gelenks 1 ist der Gelenkkopfhals 8 der sechsten Ausführungsform des Gelenks 1 als Stift bzw. Pin ausgebildet. Der erste Gelenkkopf 4 ist sternförmig ausgebildet. Mit anderen Worten: Der erste Gelenkkopf 4 weist eine sternförmige Grundfläche auf. Die Bypasskanäle 17, die an dem ersten Gelenkkopf 4 ausgebildet sind, bilden jeweils einen Hohlraum in Form eines Dreiecksprismas. Zwischen den Bypasskanälen 17 läuft der erste Gelenkkopf 4 spitz zu. Der Gelenkkopfhals 8 und der erste Gelenkkopf 4 sind massiv ausgebildet. Mit anderen Worten: Der Gelenkkopfhals 8 und der erste Gelenkkopf 4 sind ohne Durchgangsbohrung ausgebildet.

Die Figur 21 zeigt eine Schnittdarstellung der dritten Ausführungsform des Gelenks 1 in zusammengesetzten Zustand. Gleiche o. ä. Merkmale sind mit gleichen Bezugszeichen versehen. Wie in dem dargestellten Beispiel deutlich erkennbar, kann an das erste Gelenkelement 2 ein Strahlregler 18 angebracht werden, hier mittels des Außengewindes 13 des ersten Gelenkelements 2. Der Strahlregler 18 kann ein verstellbarer oder umschaltbarer Strahlregler 18 sein. Der Strahlregler 18 kann beispielsweise über, insbesondere händische, Drehung eines Teils des Strahlreglers umgeschaltet werden. Die Drehung kann eine Rotation um die Längsachse 19 des Gelenks 1 darstellen.

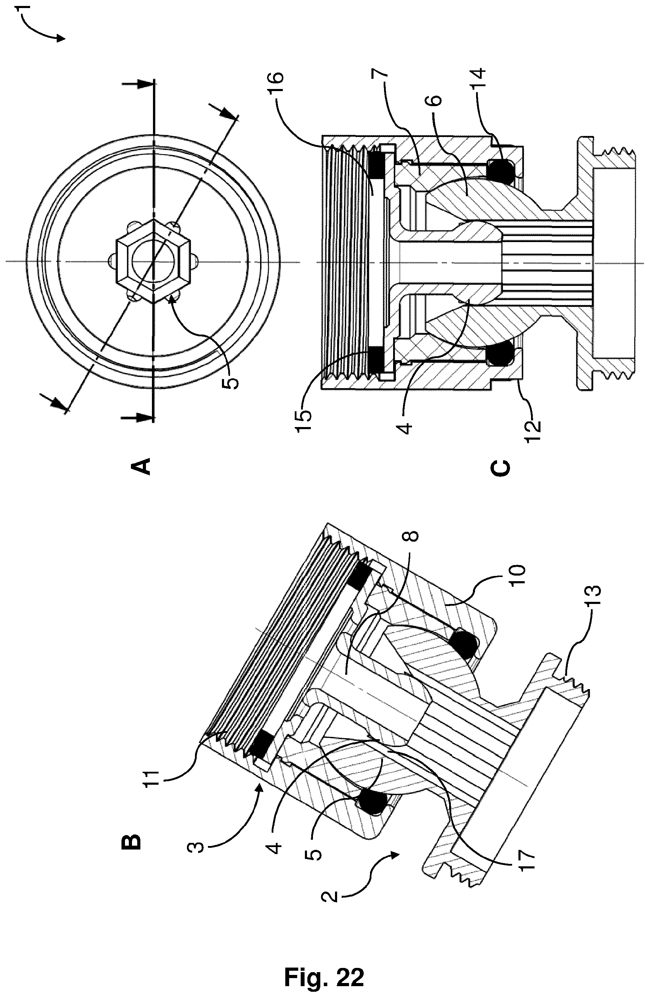

Die Darstellung gemäß Figur 22 zeigt durch unterschiedlich gelegte Axialschnitte, also Schnitte längs der Längsachse 19 des Gelenks 1, die Ausbildung der Bypasskanäle 17 an dem ersten Gelenkkopf 4 oder zwischen diesem und der Gelenkkopfaufnahme 5.

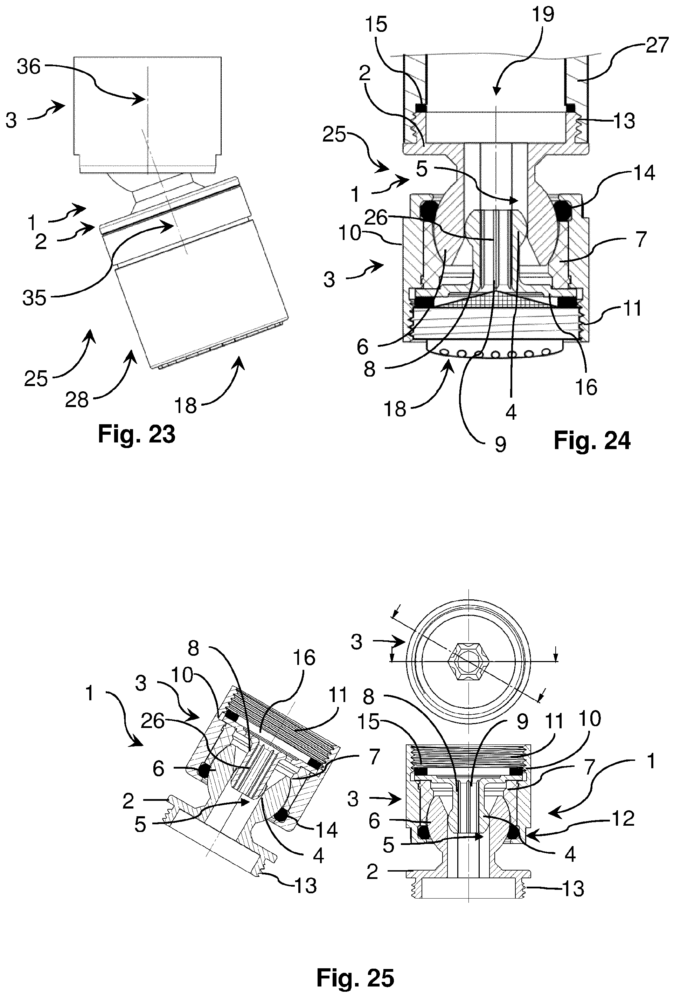

Die Figur 23 zeigt eine beispielhafte Verwendung eines erfindungsgemäßen Gelenks 1. Das erste Gelenkelement 2 ist mit einer Umstellvorrichtung 28 verschraubt, die einen Strahlregler 18 im Inneren aufweisen kann. Durch eine Drehung der Umstellvorrichtung 28 um die (beispielhaft abgewinkelte) Längsachse 19 kann zwischen wenigstens zwei Strahlgestaltungen gewechselt werden.

Die Verdrehsicherung bewirkt, dass sich dabei das erste Gelenkelement 2 nicht mitdrehen kann, sondern drehfest zum zweiten Gelenkelement 3 bleibt.

Die Figuren 24 und 25 zeigen ein weiteres erfindungsgemäßes Ausführungsbeispiel.

Zur Bildung einer sanitären Anordnung 25 ist in das zweite Gelenkelement 3 und dort in die Hülse 10 ein Strahlregler 18 eingesetzt.

Im Vergleich zu Figur 23 ist der Aufbau gerade umgekehrt.

Ein weiterer Unterschied zu den vorangehenden Ausführungsbeispielen ist eine Werkzeugangriffsfläche 26, die im Inneren des ersten Gelenkkopfes 4, beispielhaft als Innensechskant, ausgebildet ist.

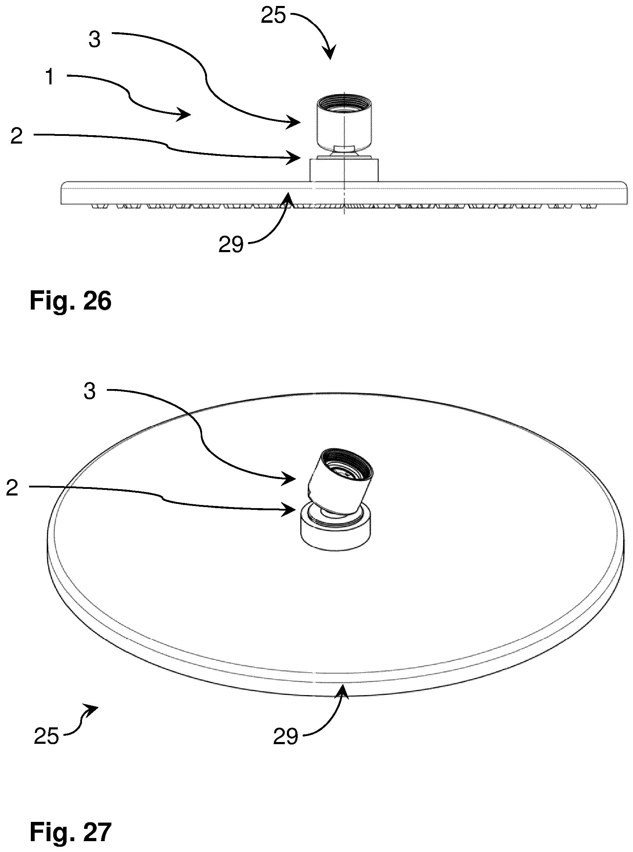

Die Figuren 26 und 27 zeigen einen vorteilhaften Anwendungsfall.

Dargestellt ist ein Duschkopf 29 oder Duschteller für eine Überkopfmontage. Häufig verbleibt hier nur ein geringer Abstand des Duschkopfes zu einer Zimmerdecke, so dass das Gelenk 1 mit seinen Gewinden schwer zugänglich ist. Wegen der Überkopfmontage ist auch der Einsatz von Werkzeug schwierig, da die Arbeitsposition nicht direkt einsehbar ist, sondern durch den Duschkopf 29 verdeckt wird.

Das erfindungsgemäße Gelenk bietet hier nun die Möglichkeit, das Aufschrauben durch Drehen des Duschkopfes zu bewerkstelligen.

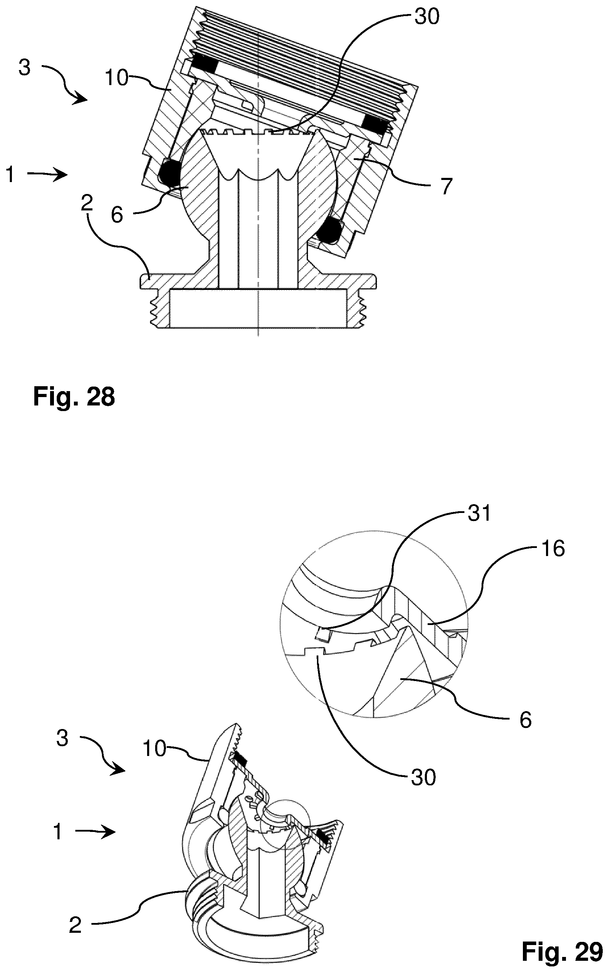

Das Ausführungsbeispiel gemäß den Figuren 28 und 29 weist keinen ersten Gelenkkopf 4 auf. Vielmehr wird hier ein Formschluss zur Drehmomentübertragung durch Vorsprünge 30 bewirkt, die (nur) bei einer Schrägstellung des Duschkopfes 29 in passende Ausnehmungen 31 greifen. Somit ist eine drehfeste Kopplung der Gelenkelemente 2, 3 miteinander nur im abgewinkelten Zustand gegeben, und es ist keine Verdrehung um die Längsachse 19 des gestreckten Gelenks 1 verhindert. Vielmehr ist nur eine Drehung um die Längsachse 35 am ersten Gelenkelement 2 und/oder um die Längsachse 36 am zweiten Gelenkelement 3 bei abgewinkeltem Gelenk 1 verhinderbar.

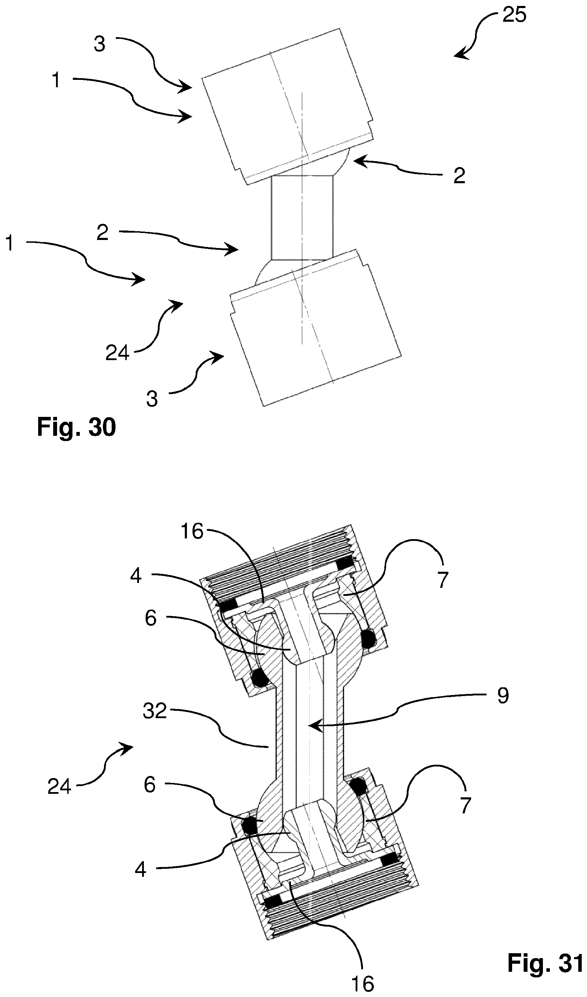

Die Figuren 30 und 31 zeigen als Anwendungsfall die Bildung eines Doppelgelenks 24 aus zwei einzelnen Gelenken 1, die an ihren jeweiligen ersten Gelenkelementen 2 starr über ein Verbindungsstück 32 miteinander verbunden sind.

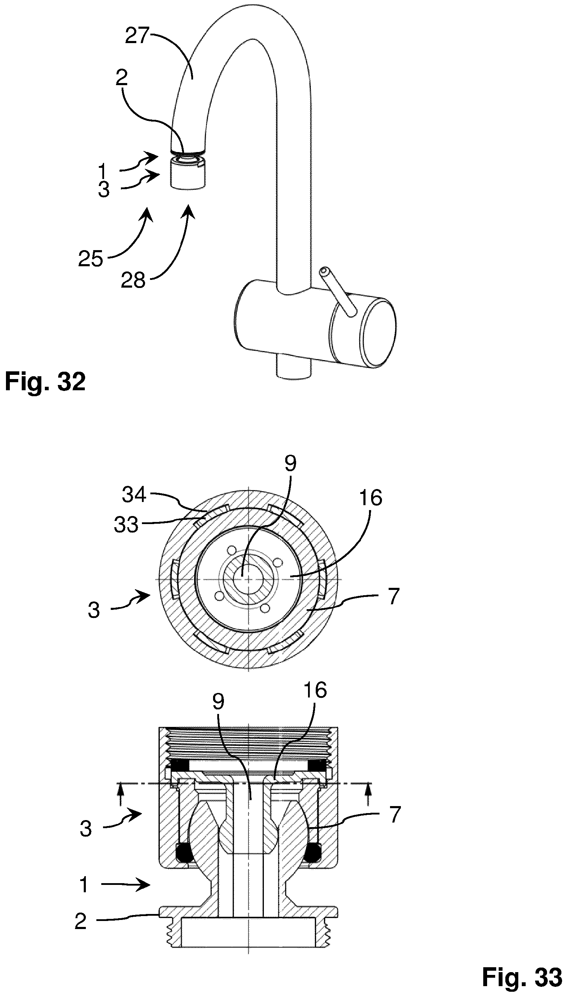

Die Figure 32 zeigt eine weitere Verwendung eines erfindungsgemäßen Strahlreglers 1. Das erste Gelenkelement 2 ist so schmal ausgebildet, dass kein Platz für einen Werkzeugansatz ausgebildet werden kann. Hier hilft die Verdrehsicherung, dass das erste Gelenkelement 2 werkzeuglos eingeschraubt werden kann.

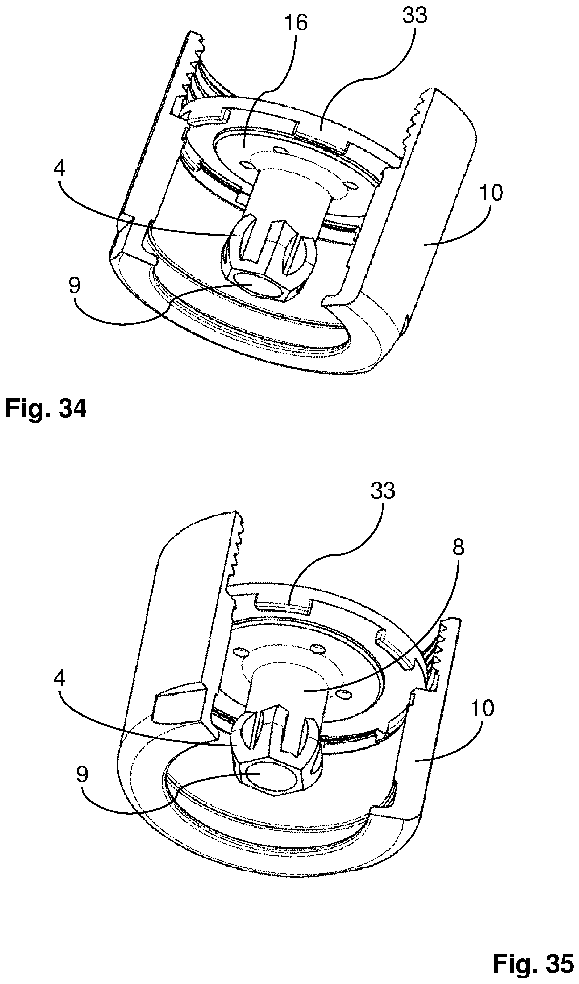

Die Figuren 33 bis 36 zeigen ein weiteres erfindungsgemäßes Ausführungsbeispiel. Durch ein Halteprofil 33 an der Gelenkkopfplatte 16 und ein korrespondierendes HalteGegenprofil 34 lässt sich hier einfach eine drehfeste Verbindung zwischen den Gelenkelementen 2, 3 herstellen.

Ein weiterer Vorteil ist, dass man die Hülse 10 leicht abschrauben kann, ohne am Gelenkkopfhals 8 des zweiten Gelenkkopfes 6 kontern zu müssen, um beispielsweise den Strahlregler 18 zu reinigen.

Der Fluidkanal 9, hier umfassend eine Durchgangsbohrung 9A durch den Gelenkkopfhals 8, ist ebenfalls längs zur Längsachse 19 ausgestaltet. Durch die oben beschriebene Verdrehsicherung ist eine Drehung des ersten Gelenkelements 2 innerhalb des zweiten Gelenkelements 3 verhindert. Ein Umschalten des Strahlreglers 18 durch Drehung des zumindest eines Teils des Strahlreglers 18 resultiert nicht in einer entsprechenden Drehung des ersten Gelenkelements 2 innerhalb des zweiten Gelenkelements 3. Somit ist die Handhabung des mit dem Gelenk 1 verbundenen Strahlreglers verbessert. Gleichzeitig ist ein Schwenken des ersten Gelenkelements 2 innerhalb des zweiten Gelenkelements 3, d. h. ein Rotieren um eine oder mehrere Achsen quer zur Längsachse 19 durch die oben beschriebene Ausgestaltung der Verdrehsicherung, insbesondere durch die kugelförmige Ausgestaltung des Gelenkkopfes 4 um die Längsachse 19 weiterhin möglich.

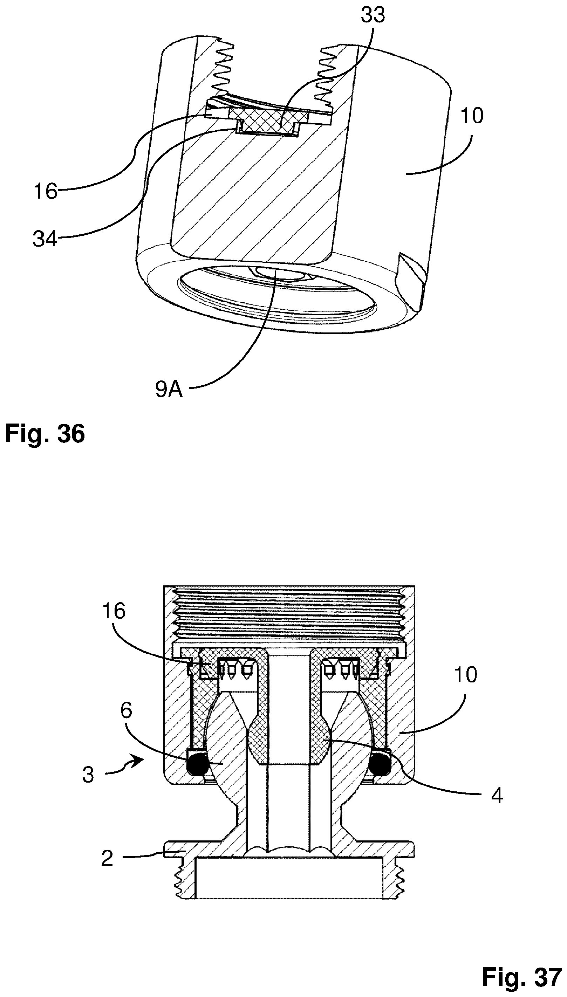

Die Figuren 37 bis 40 zeigen ein weiteres erfindungsgemäßes Ausführungsbeispiel. Die Gelenkkopfplatte 16 dieses Ausführungsbeispiels weist ähnlich zur Gelenkkopfplatte 16 des in den Figuren 33-36 gezeigten Ausführungsbeispiels Halteprofile 33 auf. Im Gegensatz zu den in den Figuren 33-36 gezeigten Halteprofilen 33, die quaderförmig bzw. rechteckig ausgestaltet sind, weisen die hier gezeigten Halteprofile 33 Abschrägungen auf. Die Halteprofile 33 greifen in entsprechende Aufnahmen bzw. Haltegegenprofile 34 an der Hülse 10 ein, wobei die Haltegegenprofile 34 ebenfalls Abschrägungen aufweisen. Die Abschrägungen sind derart ausgestaltet, dass sich die Teile beim Einsetzen beim Einsetzen der Gelenkkopfplatte 16 bzw. des Gelenkkopfes 4 in die Gelenkpfanne 7 finden.

Die Halteprofile 33 und Gegenprofile 34 weisen hierzu Abschrägungen in Umfangsrichtung, d.h. entlang eines Kreisumfangs der, oder innerhalb der, Gelenkkopfplatte 16 bzw. der Hülse 10 auf. Die Halteprofile 33 und Gegenprofile 34 weisen eine Abschrägung nach außen, d.h. entlang einer radialen Richtung der Gelenkkopfplatte 16 bzw. der Hülse 10 auf. Diese Abschrägungen erleichtern das Eingreifen der Halteprofile 33 in den Gegenprofilen 34 bzw. deren Verrastung.

Wie in Fig. 37 ersichtlich, kann ein Dichtring, wie bspw. der oben erwähnte zweite Dichtring 15 zur abdichtenden Verbindung des zweiten Gelenkelements 3 mit einer Armatur, bei Anwendung eines Drehmoments auf den Gelenkkopf 4, die Gelenkkopfplatte 16 und/oder die Hülse 10 gequetscht werden. Dieser Dichtring 15 ist so gestaltet, dass er aufgrund der Gleitreibungs-und/oder Haftreibungskoeffizienten auf der angeschraubten Armatur und/oder der Gelenkkopfplatte 16 gleitet, wenn ein vorgegebenes Grenzdrehmoment überschritten wird. Dies schont die Verdrehsicherung.

Die Gelenkkopfplatte 16 ist hierbei zwar mit der Gelenkpfanne 7 drehfest verbunden, kann sich aber in der Hülse 10 und somit relativ zu deren Gewinde 40 drehen.

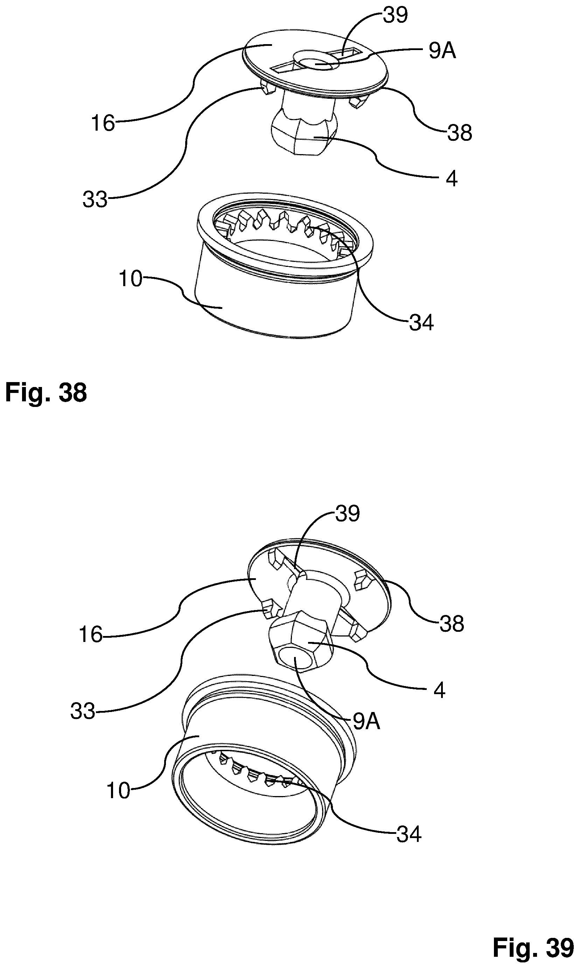

Wie besonders gut aus den Figuren 38 und 39 ersichtlich, weist die Gelenkkopfplatte 16 eine umlaufende Rippe 38 auf. Die Rippe 38 verschnappt mit der Hülse 10. Mit anderen Worten: Die Rippe 38 stellt einen Vorsprung dar, der in eine entsprechende Aufnahme an der Hülse 10 eingreift. Die Rippe 38 verhindert nicht das Verdrehen der der Gelenkkopfplatte 16 relativ zur Hülse 10. Die Rippe 38 verhindert bei einer Verdrehung der Gelenkkopfplatte 16 relativ zur Hülse 10 eine Bewegung der Gelenkkopfplatte 16 relativ zur Hülse 10 senkrecht zur und/oder entlang der Drehachse.

Wie schon mit Bezug auf die Figuren 33-36 beschrieben, lässt sich durch das Halteprofil 33 an der Gelenkkopfplatte 16 und das korrespondierende Haltegenprofil 34 einfach eine Verbindung zwischen den Gelenkelementen 2 und 3 herstellen, die bei Anwendung eines Drehmoments drehfest ist.

Wie wiederum besonders gut aus den Figuren 38 und 39 ersichtlich, weist die Gelenkkopfplatte 16 in dem gezeigten Ausführungsbeispiel Längsschlitze 39 für den Wasserdurchtritt anstelle der oben beschriebenen Durchgangsbohrungen 9B auf.

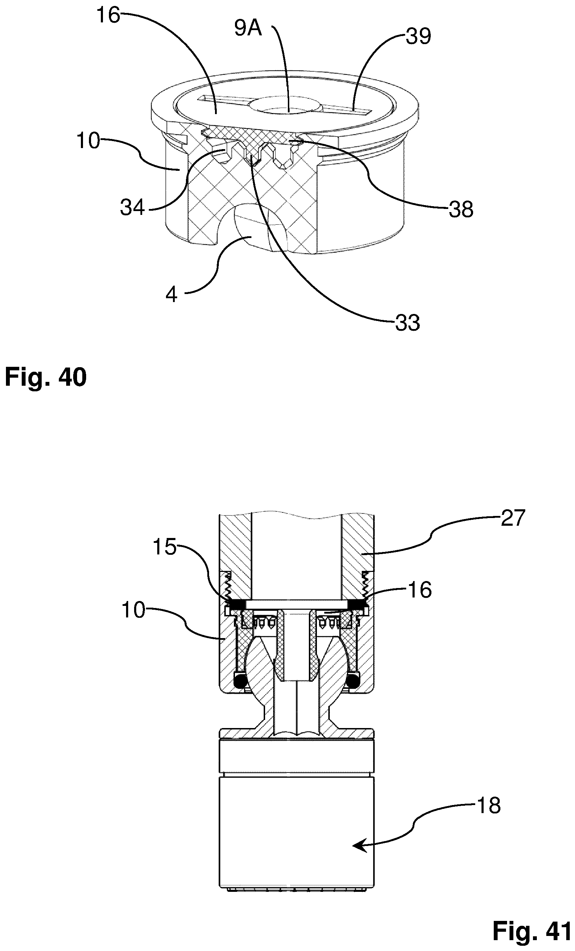

Fig. 41 zeigt die in den Figuren 37 bis 40 gezeigte Ausführungsform in Verbindung mit einem Strahlregler, beispielsweise dem oben beschriebenen Strahlregler 18.

### Bezugszeichenliste

- 1: Gelenk
- 2: erstes Gelenkelement
- 3: zweites Gelenkelement
- 4: erster Gelenkkopf
- 5: Gelenkkopfaufnahme für den ersten Gelenkkopf
- 6: zweiter Gelenkkopf
- 7: Gelenkpfanne für den zweiten Gelenkkopf
- 8: Gelenkkopfhals des ersten Gelenkkopfes
- 9: Fluidleitung
- 9A: erste Durchgangsbohrung der Fluidleitung
- 9B: zweite Durchgangsbohrung der Fluidleitung
- 10: Hülse
- 11: Innengewinde der Hülse
- 12: plane Fläche der Hülse (Schlüsselfläche)
- 13: Außengewinde des ersten Gelenkelements
- 14: Erster Dichtring
- 15: Zweiter Dichtring
- 16: Gelenkkopfplatte
- 17: Bypasskanäle
- 18: Strahlregler
- 19: Längsachse des Gelenks
- 20: Drehpunkt
- 21: Verbindungsabschnitt der Hülse
- 22: Hinterschnitt an der Gelenkpfanne
- 23: Nut
- 24: Doppelgelenk
- 25: sanitäre Anordnung
- 26: Werkzeugangriffsfläche
- 27: Armatur
- 28: Umstellvorrichtung
- 29: Duschkopf
- 30: Vorsprung
- 31: Ausnehmung
- 32: Verbindungsstück
- 33: Halteprofil
- 34: Haltegegenprofil
- 35: Längsachse von 2
- 36: Längsachse von 3
- 37: Querachse
- 38: Rippe
- 39: Längsschlitze
- 40: Gewinde
- 41: Hülse

## Patentansprüche

1. Gelenk (1) mit einer im Innern des Gelenks (1) angeordneten Fluidleitung (9), das Gelenk (1) umfassend ein erstes Gelenkelement (2) und ein zweites Gelenkelement (3) zur Aufnahme des ersten Gelenkelements (2), wobei das erste Gelenkelement (2) in dem zweiten Gelenkelement (3) um einen Drehpunkt (20) im Raum frei schwenkbar ist;
wobei das erste Gelenkelement (2) und/oder das zweite Gelenkelement (3) eine Verdrehsicherung (4, 5) umfasst, die eine Drehung des ersten Gelenkelements (2) innerhalb des zweiten Gelenkelements (3) um eine Längsachse (19, 35, 36) verhindert, wobei die Längsachse längs zur Fluidleitung angeordnet ist und wobei die Verdrehsicherung (4, 5) umfasst: einen konzentrisch zu dem Drehpunkt (20) angeordneten Gelenkkopf (4) mit einer unrunden Außen-Kontur und eine Gelenkkopfaufnahme (5) mit einer der unrunden Außen-Kontur entsprechenden Gegenkontur zur Aufnahme des Gelenkkopfes (4), wobei der Gelenkkopf (4) ein erster Gelenkkopf (4) ist,
**dadurch gekennzeichnet, dass**
das erste Gelenkelement (2) einen zweiten Gelenkkopf (6) umfasst und wobei die Gelenkkopfaufnahme (5) für den ersten Gelenkkopf (4) innerhalb des zweiten Gelenkkopfes (6) angeordnet ist.

2. Gelenk (1) nach Anspruch 1, wobei die Verdrehsicherung durch einen Formschluss, insbesondere zwischen einem Halteprofil (33) und einem Haltegegenprofil (34), zwischen dem ersten Gelenkelement (2) und dem zweiten Gelenkelement (3) hergestellt ist.

3. Gelenk (1) nach einem der vorangehenden Ansprüche, wobei an dem ersten Gelenkelement (2) oder dem zweiten Gelenkelement (3) wenigstens ein Vorsprung (30) ausgebildet ist, der zumindest in einer Gelenkstellung in eine Ausnehmung (31) an dem anderen Gelenkelement (2, 3) eingreift.

4. Gelenk (1) nach einem der vorangehenden Ansprüche, wobei der erste Gelenkkopf (4) an dem zweiten Gelenkelement (3) ausgebildet oder mit diesem drehfest verbunden ist und/oder die Gelenkkopfaufnahme (5) an dem anderen Gelenkelement (2) ausgebildet oder mit diesem drehfest verbunden ist.

5. Gelenk (1) nach einem der vorangehenden Ansprüche, wobei die drehfeste Verbindung durch ein Ineinandergreifen eines Halteprofils (33) in ein korrespondierendes Haltegegenprofil (34) realisiert ist und/oder wobei die unrunde Kontur und/oder die Gegenkontur mehrkantig, insbesondere sechskantig oder achtkantig ausgebildet ist.

6. Gelenk (1) nach einem der vorangehenden Ansprüche, wobei an der Verdrehsicherung und/oder zwischen der Verdrehsicherung und einer ein Gewinde (40), insbesondere ein Innengewinde (13) oder ein Außengewinde (11), aufweisenden Hülse (10, 41), eine Rutschkupplung ausgebildet ist, insbesondere wobei ein vorzugsweise das Gewinde (40) abdichtender Dichtring (15) die Drehung der Verdrehsicherung relativ zu dem Gewinde (40) bei Anwendung eines Drehmoments oberhalb eines Grenzdrehmoments ermöglicht und/oder wobei der Dichtring (15) an einem relativ zu der Hülse (10, 41) drehbaren Teil anliegt .

7. Gelenk (1) nach einem der vorangehenden Ansprüche, wobei der erste Gelenkkopf (4) oder eine Gelenkkopfplatte (16), an der der erste Gelenkkopf (4) ausgebildet ist, eine oder mehrere Durchgangsbohrungen (9A, 9B) als zumindest einen Teil der Fluidleitung (9) umfasst, und/oder wobei die oder eine Gelenkkopfplatte (16), an der der erste Gelenkkopf (4) ausgebildet ist, eine oder mehrere Längsschlitze (39) als zumindest einen Teil der Fluidleitung (9) umfasst.

8. Gelenk (1) nach einem der vorangehenden Ansprüche, wobei der Gelenkkopf (4) und/oder die Gelenkkopfaufnahme (5) einen oder mehrere Bypasskanäle (17) als zumindest einen Teil der Fluidleitung (9) umfasst, die vorzugsweise an dem Gelenkkopf (4) vorbei angeordnet sind, insbesondere wobei die einen oder mehreren Bypasskanäle (17) eine oder mehrere Nuten an dem Gelenkkopf (4) und/oder an der Gelenkkopfaufnahme (5) sind.

9. Gelenk (1) nach einem der vorangehenden Ansprüche, wobei der erste Gelenkkopf (4) massiv ausgebildet ist und/oder wobei der erste Gelenkkopf (4) sternförmig ausgebildet ist.

10. Gelenk (1) nach einem der vorangehenden Ansprüche, wobei der zweite Gelenkkopf (6) in einer Gelenkpfanne (7) des zweiten Gelenkelements (3) anordenbar und um den Drehpunkt (20) im Raum frei schwenkbar ist, insbesondere wobei der erste Gelenkkopf (4) von der Gelenkpfanne (7) umfasst oder mit dieser drehfest verbunden ist.

11. Gelenk (1) nach einem der vorangehenden Ansprüche, wobei das erste Gelenkelement (2), das zweite Gelenkelement (3) oder eine das erste oder zweite Gelenkelement (3) umgreifende Hülse (10) einen Verbindungsabschnitt (21) mit einem Gewinde (11) zur Verbindung mit einer Armatur oder zur Verbindung mit einem Strahlregler (18) umfasst, insbesondere wobei die Hülse (10) zumindest eine plane außenseitige Fläche (12) umfasst und/oder der erste Gelenkkopf (4) von der Hülse (10) umfasst oder mit dieser drehfest verbunden ist.

12. Gelenk (1) nach einem der vorangehenden Ansprüche, **dadurch gekennzeichnet, dass** an dem ersten Gelenkelement (2) und/oder an dem zweiten Gelenkelement (3) eine innenliegende Werkzeugangriffsfläche (26), insbesondere ein Innensechskant, ausgebildet ist.

13. Doppelgelenk (24) aus zwei Gelenken (1) nach einem der vorangehenden Ansprüche, insbesondere wobei die ersten Gelenkelemente (2) oder die zweiten Gelenkelemente (3) starr miteinander verbunden sind.

14. Sanitäre Anordnung (25) mit einem Gelenk (1) nach einem der Ansprüche 1 bis 12, **dadurch gekennzeichnet, dass** an dem ersten Gelenkelement (2) oder dem zweiten Gelenkelement (3) eine drehverstellbare Umstellvorrichtung (28) angeordnet ist.

15. Verwendung eines Gelenks (1) nach einem der Ansprüche 1 bis 12 zur Montage eines Duschkopfes (29) an einer Wasserleitung.

## Claims

1. Joint (1) with a fluid line (9) arranged inside the joint (1), the joint (1) comprising a first joint element (2) and a second joint element (3) for accommodating the first joint element (2), wherein the first joint element (2) is freely pivotable in the second joint element (3) about a pivot point (20) in space;
wherein the first joint element (2) and/or the second joint element (3) comprises an anti-rotation device (4, 5) which prevents the first joint element (2) from rotating within the second joint element (3) about a longitudinal axis (19, 35, 36), wherein the longitudinal axis is arranged longitudinally to the fluid line and wherein the anti-rotation device (4, 5) comprises: a joint head (4) arranged concentrically to the pivot point (20) with a non-circular outer contour, and a joint head receptacle (5) with a counter-contour corresponding to the non-circular outer contour for accommodating the joint head (4),
wherein the joint head (4) is a first joint head (4),
**characterized in that**
the first joint element (2) comprises a second joint head (6) and wherein the joint head receptacle (5) for the first joint head (4) is arranged inside the second joint head (6).

2. Joint (1) according to claim 1, wherein the anti-rotation device is formed by a positive connection, in particular between a retaining profile (33) and a retaining counter-profile (34), between the first joint element (2) and the second joint element (3).

3. Joint (1) according to one of the preceding claims, wherein at least one projection (30) is formed on the first joint element (2) or the second joint element (3), which projection engages in at least one joint position in a recess (31) on the other joint element (2, 3).

4. Joint (1) according to one of the preceding claims, wherein the first joint head (4) is formed on the second joint element (3) or is connected to it in a rotationally fixed manner and/or the joint head receptacle (5) is formed on the other joint element (2) or is connected to it in a rotationally fixed manner.

5. Joint (1) according to one of the preceding claims, wherein the rotationally fixed connection is realized by an engagement of a retaining profile (33) in a corresponding retaining counter-profile (34) and/or wherein the non-circular contour and/or the counter-contour is designed in a polygonal manner, in particular hexagonal or octagonal.

6. Joint (1) according to one of the preceding claims, wherein a slip clutch is formed on the anti-rotation device and/or between the anti-rotation device and a sleeve (10, 41) having a thread (40), in particular an internal thread (13) or an external thread (11), in particular wherein a sealing ring (15), preferably sealing the thread (40), allows the anti-rotation device to rotate relative to the thread (40) when a torque above a limit torque is applied and/or wherein the sealing ring (15) rests against a part that can rotate relative to the sleeve (10, 41).

7. Joint (1) according to one of the preceding claims, wherein the first joint head (4) or a joint head plate (16) on which the first joint head (4) is formed comprises one or more through bores (9A, 9B) as at least part of the fluid conduit (9), and/or wherein the or a joint head plate (16) on which the first joint head (4) is formed comprises one or more longitudinal slots (39) as at least part of the fluid conduit (9).

8. Joint (1) according to one of the preceding claims, wherein the joint head (4) and/or the joint head receptacle (5) comprise one or more bypass channels (17) as at least part of the fluid conduit (9), which are preferably arranged past the joint head (4), in particular wherein the one or more bypass channels (17) are one or more grooves on the joint head (4) and/or on the joint head receptacle (5).

9. Joint (1) according to one of the preceding claims, wherein the first joint head (4) is of solid construction and/or wherein the first joint head (4) is star-shaped.

10. Joint (1) according to one of the preceding claims, wherein the second joint head (6) can be arranged in a joint socket (7) of the second joint element (3) and can pivot freely in space about the pivot point (20), in particular wherein the first joint head (4) is enclosed by the joint socket (7) or is connected to it in a rotationally fixed manner.

11. Joint (1) according to one of the preceding claims, wherein the first joint element (2), the second joint element (3) or a sleeve (10) engaging around the first or second joint element (3) comprises a connecting section (21) with a thread (11) for connection to a fitting or for connection to a jet regulator (18), in particular wherein the sleeve (10) comprises at least one flat outer surface (12) and/or the first joint head (4) is enclosed by the sleeve (10) or is connected to it in a rotationally fixed manner.

12. Joint (1) according to one of the preceding claims, **characterized in that** an internal tool engagement surface (26), in particular an internal hexagon, is formed on the first joint element (2) and/or on the second joint element (3).

13. Double joint (24) comprising two joints (1) according to one of the preceding claims, in particular wherein the first joint elements (2) or the second joint elements (3) are rigidly connected to each other.

14. Sanitary arrangement (25) having a joint (1) according to one of claims 1 to 12, **characterized in that** a rotatably adjustable switching device (28) is arranged on the first joint element (2) or the second joint element (3).

15. Use of a joint (1) according to one of claims 1 to 12 for mounting a shower head (29) on a water pipe.

## Revendications

1. Articulation (1) comportant une conduite de fluide (9) disposée à l'intérieur de l'articulation (1), laquelle articulation (1) comprend un premier élément d'articulation (2) et un deuxième élément d'articulation (3) destiné à recevoir le premier élément d'articulation (2), le premier élément d'articulation (2) pouvant pivoter librement dans l'espace dans le deuxième élément d'articulation (3) autour d'un centre de rotation (20) ;
dans laquelle le premier élément d'articulation (2) et/ou le deuxième élément d'articulation (3) comprennent une sécurité anti-rotation (4, 5) qui empêche une rotation du premier élément d'articulation (2) à l'intérieur du deuxième élément d'articulation (3) autour d'un axe longitudinal (19, 35, 36), lequel axe longitudinal est disposé longitudinalement par rapport à la conduite de fluide,
et dans laquelle la sécurité anti-rotation (4, 5) comprend : une tête d'articulation (4) disposée de façon concentrique par rapport au centre de rotation (20), ayant un contour extérieur non circulaire, et un logement de tête d'articulation (5) ayant un contour opposé correspondant au contour extérieur non circulaire pour recevoir la tête d'articulation (4), laquelle tête d'articulation (4) est une première tête d'articulation (4),
**caractérisée en ce que** le premier élément d'articulation (2) comprend une deuxième tête d'articulation (6), le logement de tête d'articulation (5) pour la première tête d'articulation (4) étant disposé à l'intérieur de la deuxième tête d'articulation (6).

2. Articulation (1) selon la revendication 1, dans laquelle la sécurité anti-rotation est formée par un engagement positif, en particulier entre un profilé de maintien (33) et un profilé opposé de maintien (34), entre le premier élément d'articulation (2) et le deuxième élément d'articulation (3).

3. Articulation (1) selon l'une des revendications précédentes, dans laquelle est formée sur le premier élément d'articulation (2) ou le deuxième élément d'articulation (3) au moins une saillie (30) qui se met en prise, au moins dans une position de l'articulation, dans un creux (31) sur l'autre élément d'articulation (2, 3).

4. Articulation (1) selon l'une des revendications précédentes, dans laquelle la première tête d'articulation (4) est formée sur le deuxième élément d'articulation (3) ou reliée à celui-ci de manière solidaire en rotation et/ou le logement de tête d'articulation (5) est formé sur l'autre élément d'articulation (2) ou relié à celui-ci de manière solidaire en rotation.

5. Articulation (1) selon l'une des revendications précédentes, dans laquelle la liaison solidaire en rotation est réalisée par une mise en prise d'un profilé de maintien (33) dans un profilé opposé de maintien (34) correspondant et/ou dans laquelle le contour non circulaire et/ou le contour opposé sont polygonaux, en particulier hexagonaux ou octogonaux.

6. Articulation (1) selon l'une des revendications précédentes, dans laquelle un accouplement à glissement est formé sur la sécurité anti-rotation et/ou entre la sécurité anti-rotation et une douille (10, 41) présentant un filetage (40), en particulier un filetage intérieur (13) ou un filetage extérieur (11), en particulier dans laquelle un joint d'étanchéité (15) assurant de préférence l'étanchéité du filetage (40) permet la rotation de la sécurité anti-rotation par rapport au filetage (40) quand un couple de rotation supérieur à une limite de couple est appliqué et/ou dans laquelle le joint d'étanchéité (15) repose sur une pièce capable de rotation par rapport à la douille (10, 41).

7. Articulation (1) selon l'une des revendications précédentes, dans laquelle la première tête d'articulation (4) ou une plaque de tête d'articulation (16) sur laquelle la première tête d'articulation (4) est formée comprend un ou plusieurs perçages traversants (9A, 9B) formant au moins une partie de la conduite de fluide (9), et/ou dans laquelle la ou une plaque de tête d'articulation (16) sur laquelle la première tête d'articulation (4) est formée comprend une ou plusieurs fentes longitudinales (39) formant au moins une partie de la conduite de fluide (9).

8. Articulation (1) selon l'une des revendications précédentes, dans laquelle la tête d'articulation (4) et/ou le logement de tête d'articulation (5) comprennent un ou plusieurs canaux de dérivation (17) formant au moins une partie de la conduite de fluide (9), qui passent de préférence devant la tête d'articulation (4), en particulier dans laquelle les un ou plusieurs canaux de dérivation (17) sont une ou plusieurs gorges sur la tête d'articulation (4) et/ou sur le logement de tête d'articulation (5).

9. Articulation (1) selon l'une des revendications précédentes, dans laquelle la première tête d'articulation (4) est pleine et/ou dans laquelle la première tête d'articulation (4) est en forme d'étoile.

10. Articulation (1) selon l'une des revendications précédentes, dans laquelle la deuxième tête d'articulation (6) peut être disposée dans une cuvette d'articulation (7) du deuxième élément d'articulation (3) et peut pivoter librement dans l'espace autour du centre de rotation (20), en particulier dans laquelle la première tête d'articulation (4) est entourée par la cuvette d'articulation (7) ou reliée à celle-ci de manière solidaire en rotation.

11. Articulation (1) selon l'une des revendications précédentes, dans laquelle le premier élément d'articulation (2), le deuxième élément d'articulation (3) ou une douille (10) entourant le premier ou deuxième élément d'articulation (3) comprend un segment de liaison (21) muni d'un filetage (11) pour la liaison à un appareil de robinetterie ou pour la liaison à un régulateur de jet (18), en particulier dans laquelle la douille (10) comprend au moins une surface extérieure plane (12) et/ou la première tête d'articulation (4) est entourée par la douille (10) ou reliée avec celle-ci de façon solidaire en rotation.

12. Articulation (1) selon l'une des revendications précédentes, **caractérisée en ce qu'**un réceptacle d'outil (26), en particulier un réceptacle hexagonal, est formé sur le premier élément d'articulation (2) et/ou sur le deuxième élément d'articulation (3).

13. Double articulation (24) formée de deux articulations (1) selon l'une des revendications précédentes, en particulier dans laquelle les premiers éléments d'articulation (2) ou les deuxièmes éléments d'articulation (3) sont reliés de façon rigide l'un à l'autre.

14. Dispositif sanitaire (25) muni d'une articulation (1) selon l'une des revendications 1 à 12, **caractérisé en ce qu'**un dispositif de renversement (28) à rotation réglable est disposé sur le premier élément d'articulation (2) ou le deuxième élément d'articulation (3).

15. Utilisation d'une articulation (1) selon l'une des revendications 1 à 12 pour le montage d'un pommeau de douche (29) sur une conduite d'eau.
